# EUROPEAN PATENT SPECIFICATION

(11) **EP 4 032 079 B1**
(45) Date of publication and mention of the grant of the patent: **06.05.2026**
(21) Application number: 20889562.3
(22) Date of filing: 21.09.2020
(51) Int. Cl.: G08G 1/0968, G08G 1/0967, G08G 1/0965, G08G 1/07, H04W 4/40, H04W 4/02, G08G 1/0962, G08G 1/16, G01S 5/00, G01S 5/02, G01S 19/07, G01S 19/39, G01S 19/40, G01S 19/48, H04W 4/44

(54) **ELECTRONIC DEVICE FOR PROCESSING V2X MESSAGE AND OPERATING METHOD THEREOF**
ELEKTRONISCHE VORRICHTUNG ZUR VERARBEITUNG VON V2X-NACHRICHTEN UND BETRIEBSVERFAHREN DAFÜR
DISPOSITIF ÉLECTRONIQUE PERMETTANT DE TRAITER UN MESSAGE V2X, ET PROCÉDÉ DE FONCTIONNEMENT ASSOCIÉ

(30) Priority: 22.11.2019 KR 20190151659
(43) Date of publication of application: 27.07.2022
(73) Proprietor: Samsung Electronics Co., Ltd., Suwon-si, Gyeonggi-do 16677 (KR)
(72) Inventor: CHO, Kiho, Suwon-si, Gyeonggi-do 16677 (KR); CHOI, Areum, Suwon-si, Gyeonggi-do 16677 (KR); CHOI, Inyoung, Suwon-si, Gyeonggi-do 16677 (KR); CHO, Hyoungtak, Suwon-si, Gyeonggi-do 16677 (KR); JOO, Jongsung, Suwon-si, Gyeonggi-do 16677 (KR); LEE, Jehyun, Suwon-si, Gyeonggi-do 16677 (KR)
(74) Representative: Gulde & Partner
(86) International application number: PCT/KR2020/012733
(87) International publication number: WO 2021/101054

(56) References cited:
- JP-A- 2018 159 668
- KR-A- 20190 105 539
- US-A1- 2008 215 232
- US-A1- 2012 323 439
- US-A1- 2019 037 499
- US-A1- 2019 051 151
- US-A1- 2019 088 041
- US-A1- 2019 351 896
- US-B2- 7 426 437

## Description

### [Technical Field]

The disclosure relates to vehicle to everything (V2X) messages, and, more particularly, to providing traffic guide information via V2X intercommunication with accounting for accuracy and reliability of the traffic guide information.

### [Background Art]

Vehicle-to-everything (V2X) is communication technology that enables vehicles to exchange information with other entities that may affect the vehicle. Specific types of V2X communication may include vehicle-to-vehicle (V2V) communication, vehicle-to-pedestrian (V2P) communication, vehicle-to-network (V2N) communication, vehicle-to-infrastructure (V2I) communication, and vehicle-to-device (V2D) communication.

A driver operating a vehicle may more easily avoid dangerous situations by receiving information on surrounding traffic conditions (e.g., traffic accidents or obstacles) and other vehicles in real time through V2X technology. Further, a pedestrian equipped with an electronic device (e.g., a smart phone) may similarly be informed with real time travel information (e.g., a signal cycle or walking signal time point of a traffic light) through V2X technology.

The V2X technology thus allows drivers, pedestrians and other travelers to be more aware of travel and traffic situations, using sophisticated data gathering, location detection and networking made possible by proliferation of smart networked devices.

US 2019/351896 A1 discloses a conventional system and method for the detection of vulnerable road users using wireless signals.

### [Disclosure of Invention]

### [Technical Problem]

When the V2X technology is applied to a portable electronic device, the location information may sometimes be inaccurate, due to limitations on the device's ability to estimate a present location. As a result, the electronic device may generate false or unnecessary safety warning due to the inaccurate location information, causing inconvenience for users.

Certain embodiments of the disclosure provide an electronic device and method for providing information related to the reliability of a V2X message.

### [Solution to Problem]

The invention is defined by the appended claims. The description that follows is subjected to this limitation. Any disclosure lying outside the scope of said claims is only intended for illustrative as well as comparative purposes.

According to certain embodiments of the disclosure, an electronic device is provided as defined by the appended claims .

According to certain embodiments of the disclosure, an operating method of an electronic device is provided as defined by the appended claims.

### [Brief Description of Drawings]

The above and other aspects, features and advantages of certain embodiments of the disclosure will be more apparent from the following detailed description, taken in conjunction with the accompanying drawings.
FIG. 1 is a block diagram illustrating an electronic device in a network environment according to certain embodiments.
FIGS. 2A and 2B are block diagrams illustrating electronic devices for V2X communication according to certain embodiments.
FIG. 3 is a block diagram illustrating an electronic device for V2X communication equipped in a vehicle according to certain embodiments.
FIG. 4 is a block diagram illustrating software configuration of an electronic device for V2X communication according to certain embodiments.
FIG. 5 is a flow diagram illustrating a process of transmitting location information at a first electronic device according to certain claimed embodiments.
FIG. 6 is a flow diagram illustrating a process of outputting traffic guide information at a second electronic device according to certain claimed embodiments.
FIG. 7A is screenshots showing traffic guide information according to certain claimed embodiments. FIG. 7B is screenshots showing traffic guide information according to certain claimed embodiments. FIG. 7C is screenshots showing traffic guide information according to certain claimed embodiments. FIG. 8A is screenshots showing traffic guide information according to certain claimed embodiments. FIG. 8B is screenshots showing traffic guide information according to certain claimed embodiments. FIG. 8C is screenshots showing traffic guide information according to certain claimed embodiments.
FIG. 9 is a flow diagram illustrating a process of outputting traffic guide information, based on reliability, at an electronic device according to certain embodiments.
FIG. 10 is a screenshot showing a screen for setting an output range of traffic guide information according to certain embodiments.
FIG. 11A is a screenshot showing traffic guide information associated with particular areas according to certain embodiments. FIG. 11B is a screenshot showing traffic guide information associated with particular areas according to certain embodiments.
FIG. 12 is a flow diagram illustrating a process of transmitting a location correction signal at a second electronic device according to certain embodiments.
FIG. 13 is a flow diagram illustrating a process of correcting a location at a first electronic device according to certain embodiments.
FIG. 14 is a diagram illustrating an example of correcting a location of an electronic device located in a tunnel according to certain embodiments.
FIG. 15 is a diagram illustrating an example of correcting a location of an electronic device including a low-performance location recognition sensor according to certain embodiments.
FIG. 16 is a diagram illustrating an example of correcting a location of an electronic device, based on a road side unit (RSU), according to certain embodiments.

### [Mode for the Invention]

Hereinafter, embodiments of the disclosure will be described in detail with reference to the accompanying drawings.

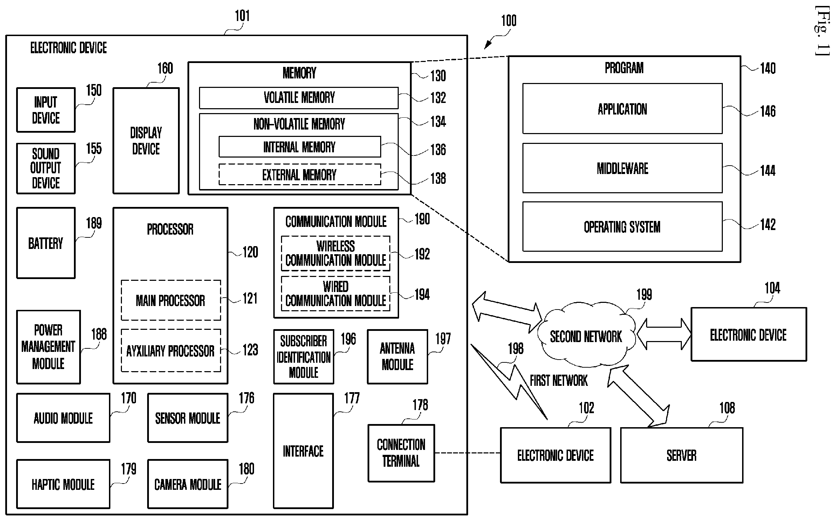

FIG. 1 is a block diagram illustrating an electronic device 101 in a network environment 100 according to certain embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190 (e.g. communication circuitry, whether wired or wireless), a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to an example embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The memory 134 may further include internal memory 136 and/or external memory 138.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an example embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element implemented using a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various embodimentscertain embodiments may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

It should be appreciated that various embodimentscertain embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodimentsCertain embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, theThe term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodimentscertain embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodimentscertain embodiments, each component (e.g., a module or a program) of the above-described components may include a single entity or multiple entities. According to various embodimentscertain embodiments, one or more of the above-described components may be omitted, or one or more other components may be added. Alternatively or additionally, a plurality of components (e.g., modules or programs) may be integrated into a single component. In such a case, according to various embodimentscertain embodiments, the integrated component may still perform one or more functions of each of the plurality of components in the same or similar manner as they are performed by a corresponding one of the plurality of components before the integration. According to various embodimentscertain embodiments, operations performed by the module, the program, or another component may be carried out sequentially, in parallel, repeatedly, or heuristically, or one or more of the operations may be executed in a different order or omitted, or one or more other operations may be added.

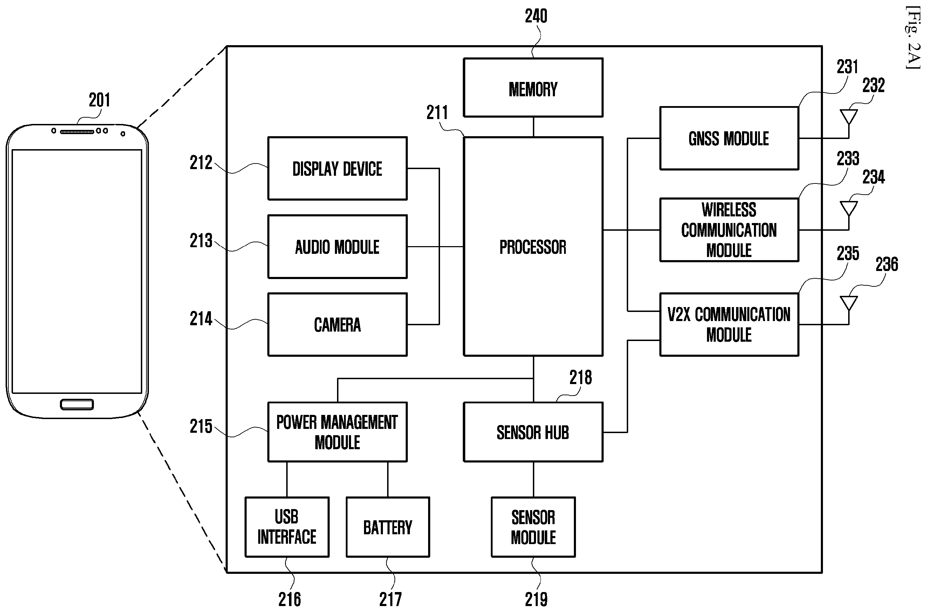

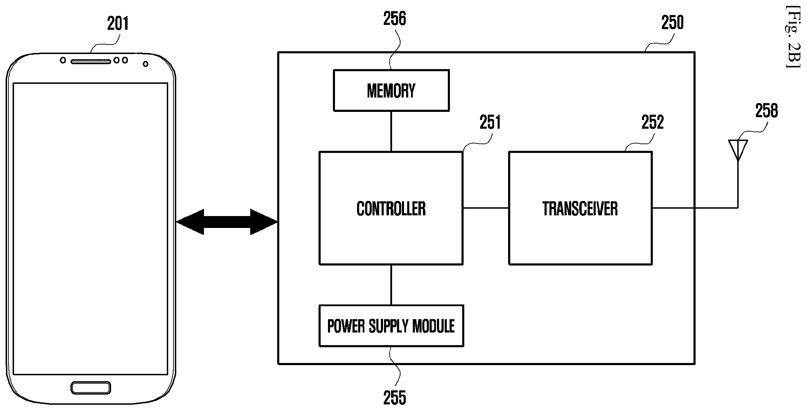

FIGS. 2A and 2B are block diagrams illustrating electronic devices for V2X communication according to certain embodiments. In the following description, an electronic device 201 may include the electronic device 101 in FIG. 1.

Referring to FIG. 2A, the electronic device 201 may include a processor 211 (e.g., including processing circuitry), a display device 212, an audio module 213, a camera 214, and a power management module 215(e.g., PMIC(power management integrated circuit)), a universal serial bus (USB) interface 216, a battery 217, a sensor hub 218, a sensor module 219, a global navigation satellite system (GNSS) module 231, a GNSS antenna 232, a wireless communication module 233, a wireless communication antenna 234, a V2X communication module 235 (e.g., V2X communication circuit), a V2X communication antenna 236, and a memory 240. In an embodiment, the processor 211 may be substantially the same as or similar to the main processor 121 of FIG. 1 or may be included in the main processor 121 of FIG. 1. The display device 212 may be substantially the same as or similar to the display device 160 of FIG. 1 or may be included in the display device 160 of FIG. 1. The audio module 213 may be substantially the same as or similar to the audio module 170 of FIG. 1 or may be included in the audio module 170 of FIG. 1. The camera 214 may be substantially the same as or similar to the camera module 180 of FIG. 1 or may be included in the camera module 180 of FIG. 1. The PMIC 215 may be substantially the same as or similar to the power management module 188 of FIG. 1 or may be included in the power management module 188 of FIG. 1. The USB interface 216 may be substantially the same as or similar to the interface 177 of FIG. 1 or may be included in the interface 177 of FIG. 1. The battery 217 may be substantially the same as or similar to the battery 189 of FIG. 1 or may be included in the battery 189 of FIG. 1. The sensor hub 218 may be substantially the same as or similar to the auxiliary processor 123 of FIG. 1 or may be included in the auxiliary processor 123 of FIG. 1. The sensor module 219 may be substantially the same as or similar to the sensor module 176 of FIG. 1 or may be included in the sensor module 176 of FIG. 1. At least one of the GNSS module 231, the wireless communication module 233, or the V2X communication module 235 may be substantially the same as or similar to the wireless communication module 192 of FIG. 1 or may be included in the wireless communication module 192 of FIG. 1. At least one of the GNSS antenna 232, the wireless communication antenna 234, or the V2X communication antenna 236 may be substantially the same as or similar to the antenna module 197 of FIG. 1 or may be included in the antenna module 197 of FIG. 1. The memory 240 may be substantially the same as or similar to the memory 130 of FIG. 1 or may be included in the memory 130 of FIG. 1.

According to certain embodiments, the processor 211 may control the overall operation of the electronic device 201. In an embodiment, upon the execution of instructions stored in the memory 240, the processor 211 may control at least one hardware to perform operations corresponding to the instructions. In an embodiment, the processor 211 may acquire various types of information (e.g., location information or traffic situation information) related to the electronic device 201, based on at least one of data received from the sensor module 219, data from the GNSS module 231, or images from the camera 214. The processor 211 may control the V2X communication module 235 to transmit a V2X message containing various types of information related to the electronic device 201. For example, when an application program related to V2X is executed, the processor 211 may control V2X related operations (e.g., location estimation or V2X message transmission). For example, the V2X message may contain location information of the electronic device 201 and/or accuracy information of location information. In an example, the accuracy of location information is a difference between the location information of the electronic device 201 estimated by the processor 211 and an actual location of the electronic device 201, and may indicate an error range of the location information of the electronic device 201 estimated by the processor 211. In an example, the accuracy of location information may be determined based on the strength of a GNSS signal received through the GNSS module 231. In another example, the accuracy of location information may be determined based on the location estimation performance of a sensor used to estimate the location information of the electronic device 201. For example, although not shown, the V2X communication module 235 and the V2X communication antenna 236 may be connected by a front end module (FEM).

According to certain embodiments, the processor 211 may determine whether a traffic guide event (e.g., a traffic accident or traffic jam for which a driver should be notified) occurs, based on a V2X message received from an external device, and location information (e.g., a present location) of the electronic device 201. In an embodiment, when receiving the V2X message from the external device through the V2X communication module 235 (or the wireless communication module 233), the processor 211 may identify the location of the external device from the received V2X message. In addition, the processor 211 may determine whether an occurrence of a traffic guide event such as a traffic accident or traffic jam is detected, based on the location of the external device and the location of the electronic device 201. In an example, when receiving the accident occurrence information and the location of the external device through the V2X message, the processor 211 may detect whether an accident location of the external device is adjacent to the present location of the electronic device 201. If a distance between the external device and the electronic device 201 is within a predetermined reference distance, the processor 211 may determine that a traffic guide event (e.g., an event for generating of a notification of a traffic accident) has occurred.

In another example, when receiving the location and movement (e.g., a moving direction or speed) of the external device through the V2X message, the processor 211 may determine a possibility of collision between the external device and the electronic device 201 (e.g., between two vehicles) by comparison of the respective locations, movement directions, and/or relative velocities between the external device and the electronic device 201. If the collision probability between the external device and the electronic device 201 matches or exceeds predetermined condition (e.g., a reference probability and/or accuracy threshold), the processor 211 may determine that a traffic guide event has occurred (e.g., an event for generating a collision warning notification).

According to certain embodiments, when determining that the traffic guide event has occurred, the processor 211 may control the display device 212 to output information related to the traffic guide event in a display manner corresponding to the reliability of the traffic guide event. That is, the message output as part of the traffic guide event may include some indicator of the estimated reliability of the notification information. In an embodiment, the reliability of the traffic guide event indicates a relationship between the traffic guide event and the electronic device 201, and may be checked based on the accuracy related to the location information of the external device and the electronic device 201. For example, as the accuracy of the location information of the external device and the electronic device 201 is relatively high, the processor 211 may determine that the relationship between the traffic guide event and the electronic device 201 is relatively high. Thus, as the accuracy of the location information of the external device and the electronic device 201 is relatively high, the reliability of the traffic guide event may be determined to be relatively high.

According to certain embodiments, when receiving a V2X message for location correction from the external device, the processor 211 may correct the location information of the electronic device 201, based on the location information of the external device. In an embodiment, when receiving the V2X message for location correction from the external device, the processor 211 may determine that the accuracy of the location information of the external device is more reliable than the accuracy of the location information of the electronic device 201 estimated by the processor 211. Thus, based on the location information of the external device, the processor 211 may correct the location information of the electronic device 201.

According to certain embodiments, the V2X communication module 235 may be implemented with a chip set capable of processing data (e.g., V2X messages) related to vehicle safety. For example, the V2X communication module 235 may perform communication for V2X in accordance with a WLAN-based communication standard (e.g., IEEE 802.11p communication standard) (e.g., WAVE) or a cellular-based C-V2X communication standard. In an embodiment, the V2X communication module 235 may process V2X messages transmitted and received through the V2X communication antenna 236. For example, the V2X communication module 235 may process V2X-related data received from the processor 211 or the sensor hub 218, thereby generate an electrical signal corresponding to a communication signal for V2X, and provide it to the V2X communication antenna 236. For example, the V2X communication module 235 may process the V2X message received through the V2X communication antenna 236 and provide it to the processor 211 or the sensor hub 218. For example, the V2X communication module 235 may include a security module in which information utilized to process V2X-related data is stored. For example, the security module may store various types of information such as information used to modulate and/or demodulate V2X messages, information related to encryption, and information used to process messages.

According to certain embodiments, the display device 212 may display various graphic objects (e.g., a graphical user interface (GUI)) associated with vehicle safety. In an embodiment, the display device 212 may display various graphic objects related to the traffic guide event in a display manner corresponding to the reliability of the traffic guide event. For example, the display manner may include at least one of a color, a display area, a size, or a brightness used to display information related to the traffic guide event.

According to certain embodiments, the audio module 213 may output a vehicle-related warning tone (e.g., a warning voice). The camera 214 may acquire an image and provide it to the processor 211. In an embodiment, the processor 211 may determine a traffic situation (e.g., a traffic accident or traffic jam), based on information acquired through the camera 214.

According to certain embodiments, the PMIC 215 may regulate the voltage or current supplied from the battery 217 to a value suitable for components (or hardware) of the electronic device 201 and provide it to the components. The USB interface 216 may be connected with a cable for wired connection between the electronic device 201 and an external device. For example, the electronic device 201 may transmit/receive data or power to/from the external device connected through the USB interface 216.

According to certain embodiments, the wireless communication module 233 may be implemented with a chip set for wireless communication. For example, the wireless communication module 233 may provide cellular communication or short-range wireless communication (e.g., Wi-Fi, or Bluetooth).

According to certain embodiments, the sensor module 219 may detect an operating state (e.g., a movement) of the electronic device 201 or an external environment (e.g., a user state). In an embodiment, the sensor module 219 may include at least one of an acceleration sensor, a gyro sensor, or a geomagnetic sensor.

According to certain embodiments, the electronic device 201 may not include the sensor hub 218. In this case, the sensor module 219 may be driven by the processor 211.

According to certain embodiments, at least one of the GNSS antenna 232, the wireless communication antenna 234, or the V2X communication antenna 236 may be configured as one antenna.

Referring to FIG. 2B, according to certain embodiments, the electronic device 201 may support V2X communication through an external electronic device 250. For example, the external electronic device 250 may include a V2X communication module in the form of dongle.

According to certain embodiments, the external electronic device 250 may include a controller 251, a transceiver 252, a power supply module 255, and a memory 256. In an embodiment, the controller 251 may control a frequency band obtained by a signal used to modulate a designated carrier wave. In an embodiment, the transceiver 252 may perform V2X communication under the control of the controller 251. For example, the transceiver 252 may generate an electrical signal corresponding to a V2X-related signal and provide it to a V2X communication antenna 258. In an embodiment, the power supply module 255 may supply power for operating the external electronic device 250. The memory 256 may store information related to operations of the external electronic device 250.

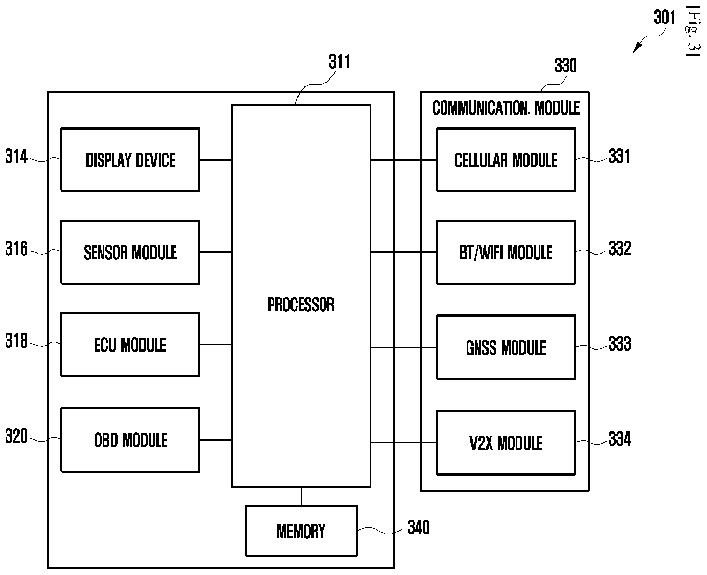

FIG. 3 is a block diagram illustrating an electronic device for V2X communication equipped in a vehicle according to certain embodiments. In the following description, an electronic device 301 may include the electronic device 101 shown in FIG. 1 or the electronic device 201 shown in FIG. 2A.

Referring to FIG. 3, in certain embodiments, the electronic device 301 equipped in a vehicle may operate similarly to the electronic device 201 of FIG. 2A, except for further including an electronic control unit (ECU) module 318 and an on-board diagnostics (OBD) module 320 which are used for controlling the vehicle. For example, a processor 311, a display device 314, a sensor module 316, a communication module 330, and a memory 340, which are shown in FIG. 3, may operate similarly to the processor 211, the display device 212, the sensor module 219, the wireless communication module 233, the GNSS module 231, the V2X communication module 235, and the memory 240, which are shown in FIG. 2A. In an example, the communication module 330 may include a cellular module 331, a Bluetooth/wireless fidelity (BT/WiFi) module 332, a GNSS module 333, and a V2X module 334. Thus, components of the electronic device 301 which are similar to those of the electronic device 201 of FIG. 2A will not be described in detail to avoid repetition.

According to certain embodiments, the ECU module 318 may control operations of at least one of an engine, driving (e.g., throttle, transmission, etc.), braking, steering systems, or other electronic systems of a vehicle, in which the electronic device 301 is equipped. In an example, the engine control may coordinate operations of the internal combustion cycle for the vehicle engine, such as ignition engine timing, idling, or limit configurations (e.g., rev-limit or maximum speed). In an example, the driving control may include control of an automatic transmission of the vehicle.

According to certain embodiments, the OBD module 320 may check and control an electric and/or electronic operation state of a vehicle in which the electronic device 301 is equipped. In an embodiment, the OBD module 320 may monitor a system related to emissions of the vehicle. If a failure occurs which affects the emissions of the vehicle, the OBD module 320 may record a failure code and activate a warning light so as to allow a vehicle driver and a mechanic to recognize the problem. For example, the OBD module 320 may be configured in accordance with the standard of OBD-II.

According to certain embodiments, based on vehicle information collected by the ECU module 318 and/or the OBD module 320, the processor 311 may estimate and/or correct a location and an operating state of a vehicle in which the electronic device 301 is equipped.

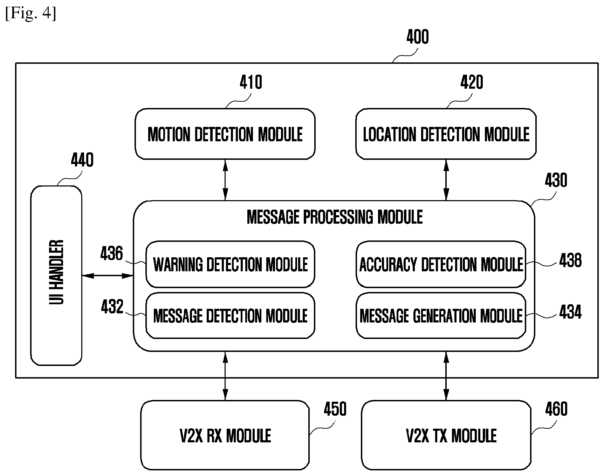

FIG. 4 is a block diagram illustrating software configuration of an electronic device for V2X communication according to certain embodiments. The electronic device of FIG. 4 will be described using the electronic device 201 of FIG. 2A as an example. The electronic device of FIG. 4 may be also configured as the electronic device 101 of FIG. 1, the electronic device 201 of FIG. 2B, or the electronic device 301 of FIG. 3. The software configuration of the electronic device may be a program (e.g., the program 140 in FIG. 1) in a memory 400 (e.g., the memory 130 in FIG. 1 or the memory 240 in FIG. 2A).

Referring to FIG. 4, the memory 400 of the electronic device 201 may include a motion detection module 410, a location detection module 420, a message processing module 430, a user interface (UI) handler 440, a V2X receive (Rx) module 450, and a V2X transmit (Tx) module 460. In an embodiment, the memory 400 may be identical with or included in the memory 240 of FIG. 2A.

According to certain embodiments, the motion detection module 410 may detect a movement direction and/or speed of the electronic device 201 using a sensor module (e.g., the sensor module 219 in FIG. 2A).

According to certain embodiments, the location detection module 420 may acquire location information of the electronic device 201. In an embodiment, the location detection module 420 may acquire the location information of the electronic device 201 by using a location sensor (e.g., the GNSS module 231 in FIG. 2A) or a network (e.g., Wi-Fi, cellular communication).

According to certain embodiments, the message processing module 430 may include a message detection module 432, a message generation module 434, a warning detection module 436, and an accuracy detection module 438. **In** an embodiment, the message detection module 432 may identify current signal information, next signal information, and/or location information of an external device (e.g., another vehicle) by analyzing a V2X message received from the V2X Rx module 450. In an embodiment, the message generation module 434 may generate a V2X message that contains location information of the electronic device 201 identified through the location detection module 420. For example, the V2X message may further contain accuracy information of the location information of the electronic device 201 received from the accuracy detection module 438.

In an embodiment, the warning detection module 436 may determine whether a traffic guide event related to the electronic device 201 has occurred, based on the location information of the external device identified through the message detection module 432 and the location information of the electronic device 201 identified through the location detection module 420. For example, if a distance between an accident location of the external device identified through the message detection module 432 and a location of the electronic device 201 identified through the location detection module 420 is within a reference distance, the warning detection module 436 may determine that an event for notifying an accident has occurred. **In** another example, based on the location/movement information of the external device identified through the message detection module 432, the location information of the electronic device 201 identified through the location detection module 420, and the movement information of the electronic device 201 identified through the motion detection module 410, the warning detection module 436 may determine whether an event for notifying a danger of collision has occurred.

In an embodiment, the accuracy detection module 438 may determine the accuracy of the location information of the electronic device 201 acquired by the location detection module 420. For example, the accuracy detection module 438 may determine the accuracy of location information, based on at least one of a location estimation manner (or a location estimation sensor) used by the location detection module 420 to estimate the location of the electronic device 201, or the received signal strength used for location estimation. For example, the location estimation manner may indicate a signal reception type used for location estimation, such as GNSS, cellular communication, Wi-Fi, ultra-wideband (UWB), or mmWave.

According to certain embodiments, the UI handler 440 may display, on the display device (e.g., the display device 212 in FIG. 2A), a UI associated with the traffic guide event recognized by the warning detection module 436. In an embodiment, the UI associated with the traffic guide event may be set differently based on the reliability of the traffic guide event. For example, the reliability of the traffic guide event may be determined based on the accuracy information related to the location information of the external device and the accuracy information of the location information of the electronic device 201 detected by the accuracy detection module 438. In an example, the reliability of the traffic guide event may be checked by the warning detection module 436 and/or the accuracy detection module 438.

According to certain embodiments, the V2X Tx module 460 and the V2X Rx module 450 may transmit and receive V2X messages, respectively. In an embodiment, the V2X Rx module 450 and the V2X Tx module 460 may communicate with external devices by supporting at least one of various communication technologies such as WAVE standard or cellular-V2X (C-V2X), LTE device-to-device (LTE D2D), network, or mmWave band. For example, the V2X Rx module 450 and the V2X Tx module 460 may be identical with or included in the V2X communication module 235 of FIG. 2A.

According to certain embodiments of the disclosure, an electronic device (e.g., the electronic device 101 in FIG. 1, the electronic device 201 in FIG. 2A, the electronic device 201 in FIG. 2B, or the electronic device 301 in FIG. 3) may include a display device (e.g., the display device 160 in FIG. 1, the display device 212 in FIG. 2A, or the display device 314 in FIG. 3), a wireless communication module (e.g., the wireless communication module 192 in FIG. 1, the V2X communication module 235 in FIG. 2A, or the V2X communication module 334 in FIG. 3) supporting vehicle-to-everything (V2X) communication, and at least one processor (e.g., the processor 120 in FIG. 1, the processor 211 in FIG. 2A, or the processor 311 in FIG. 3) operatively connected to the display device and the wireless communication module. The at least one processor may be configured to receive a V2X message from another electronic device through the wireless communication module, to determine, based on location information of the another electronic device contained in the V2X message and location information of the electronic device, whether a traffic guide event has occurred, to check, in response to occurrence of the traffic guide event, a reliability of the traffic guide event, based on at least one of an accuracy of the location information of the another electronic device or an accuracy of the location information of the electronic device, and to control the display device to display information related to the traffic guide event in a display manner corresponding to the reliability of the traffic guide event.

According to certain embodiments, the at least one processor may be further configured to check the accuracy of the location information of the another electronic device in the V2X message.

According to certain embodiments, the at least one processor may be further configured to check the accuracy of the location information of the electronic device, based on a type of a location recognition sensor used for estimating the location of the electronic device, or based on a type of a location estimation manner.

According to certain embodiments, the V2X message may contain at least one of the location information of, accuracy information of the location information of, or movement information of the another electronic device.

According to certain embodiments, the at least one processor may be further configured to, in case that the reliability of the traffic guide event satisfies a predetermined condition, control the display device to display the information related to the traffic guide event in the display manner corresponding to the reliability of the traffic guide event.

According to certain embodiments, the predetermined condition may include a level of the reliability of the traffic guide event for displaying the information related to the traffic guide event.

According to certain embodiments, the at least one processor may be further configured to determine whether a location associated with the traffic guide event is included in a cautious driving area, and to control, in response to determining that the location associated with the traffic guide event is included in the cautious driving area, the display device to display the information related to the traffic guide event in the display manner corresponding to the reliability of the traffic guide event regardless of the predetermined condition.

According to certain embodiments, the cautious driving area may include at least one of a frequent accident area, a construction spot, or a children protection zone.

According to certain embodiments, the at least one processor may be further configured to determine whether there is another V2X message related to the V2X message received from the another electronic device, and to check, in response to determining that there is the another V2X message, the reliability of the traffic guide event, based on the another V2X message, the V2X message, and the location information of the electronic device.

According to certain embodiments, the display device may display a warning message associated with the traffic guide event, based on at least one of color, symbol, size, or brightness corresponding to the reliability of the traffic guide event.

According to certain embodiments of the disclosure, an electronic device (e.g., the electronic device 101 in FIG. 1, the electronic device 201 in FIG. 2A, the electronic device 201 in FIG. 2B, or the electronic device 301 in FIG. 3) may include a display device (e.g., the display device 160 in FIG. 1, the display device 212 in FIG. 2A, or the display device 314 in FIG. 3), a wireless communication module (e.g., the wireless communication module 192 in FIG. 1, the V2X communication module 235 in FIG. 2A, or the V2X communication module 334 in FIG. 3) supporting vehicle-to-everything (V2X) communication, and at least one processor (e.g., the processor 120 in FIG. 1, the processor 211 in FIG. 2A, or the processor 311 in FIG. 3) operatively connected to the display device and the wireless communication module. The at least one processor may be configured to transmit a V2X message containing location information of the electronic device to another electronic device through the wireless communication module, to identify, in response to receiving a location correction signal from the another electronic device through the wireless communication module, location information of the another electronic device contained in the location correction signal, to identify at least one of a relative distance or a relative direction from the another electronic device, and to correct the location information of the electronic device, based on at least one of the relative distance or the relative direction from the another electronic device and based on the location information of the another electronic device.

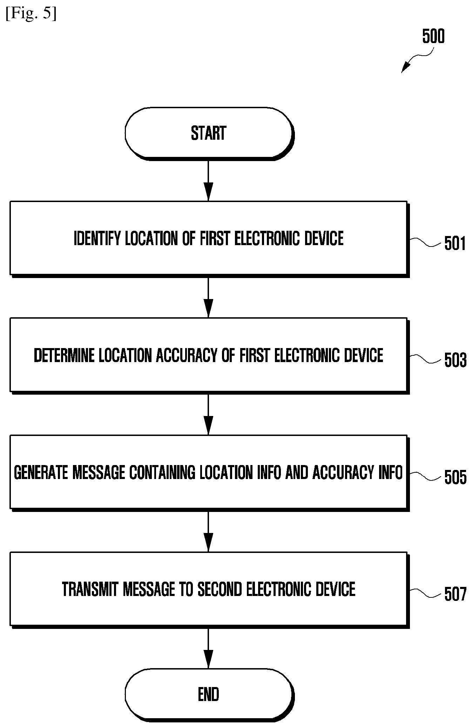

FIG. 5 is a flow diagram illustrating a process 500 of transmitting location information at a first electronic device according to certain embodiments. In the flow diagram, respective operations corresponding to depicted blocks may be performed sequentially, but this is not necessary. For example, the order of such operations may be changed at least in part, and at least two operations may be performed in parallel or concurrently. In addition, at least one operation may be omitted if desired. A first electronic device of FIG. 5 may be the electronic device 101 of FIG. 1, the electronic device 201 of FIG. 2A, the electronic device 201 of FIG. 2B, or the electronic device 301 of FIG. 3.

Referring to FIG. 5, in certain embodiments, the first electronic device (e.g., the processor 120 in FIG. 1, the processor 211 in FIG. 2A, or the processor 311 in FIG. 3) may identify a location of the first electronic device (e.g., the electronic device 201 or 301) at operation 501. In an embodiment, when an application program related to V2X is driven, the processor 211 may estimate a current location of the first electronic device (e.g., the electronic device 201 or 301) by using the GNSS module 231 (e.g., a location sensor) or network information (e.g., Wi-Fi or cell information).

According to certain embodiments, at operation 503, the first electronic device (e.g., the processor 120, 211, or 311) may determine and/or detect the location accuracy of the first electronic device (e.g., the electronic device 201 or 301). In an embodiment, when the first electronic device (e.g., the electronic device 201 or 301) includes a plurality of location recognition sensors, the accuracy of the location information of the first electronic device (e.g., the electronic device 201 or 301) estimated by the respective location recognition sensors may be different. Thus, the processor 211 may check the location accuracy of the first electronic device (e.g., the electronic device 201 or 301), based on the type (or location recognition manner) of the location recognition sensor used for location estimation. For example, the processor 211 may determine that the location accuracy of the first electronic device estimated using the GNSS module 211 is relatively higher that the location accuracy of the first electronic device estimated using the BT/WiFi module 332. In an embodiment, if the location of the first electronic device (e.g., the electronic device 201 or 301) is estimated using the GNSS module 231, the processor 211 may determine the location accuracy of the first electronic device (e.g., the electronic device 201 or 301), based on the strength of a GNSS signal. For example, the processor 211 may determine that the location accuracy of the first electronic device is relatively high as the strength of the GNSS signal is relatively high.

According to certain embodiments, at operation 505, the first electronic device (e.g., the processor 120, 211, or 311) may generate a message (a V2X message) that contains the location information and accuracy information of the first electronic device (e.g., the electronic device 201 or 301). In an embodiment, the processor 311 of the electronic device 301 equipped in a vehicle may generate a basic safety message (BSM), as shown in Table 1, containing the location information and accuracy information of the first electronic device (e.g., the electronic device 301). For example, Table 1 may include a structure of the BSM defined in the WAVE standard.

**[Table 1]**

| Basic Safety Message | | Description | Remark - SAE J2735 |
|---|---|---|---|
| msgCnt | | Message sequence number | INTEGER (0~127) |
| id | | Temporary ID | Random |

| secMark | | Dsecond (sec) | |
|---|---|---|---|
| lat | | Latitude | 1/10 microdegrees (10^-7) |
| long | | Longitude | 1/10 microdegrees (10^-7) |
| elev | | Elevation | Elevation in 10 cm increments |
| accuracy | semiMajor | Accuracy of ellipse major axis radius | |
| | semiMinor | Accuracy of ellipse minor axis radius | |
| | orientation | Accuracy of ellipse major axis rotation angle | |
| transmission | | Current state of vehicle transmission | |
| speed | | Speed of vehicle | |
| heading | | Direction of vehicle with respect to due north | |
| angle | | Steering angle of vehicle | |
| accelSet | | 3 orthogonal accelerations and yaw rotational acceleration | |
| brakes | | Brake system status | |
| size | | Vehicle length and width | |

For example, the BSM in Table 1 may contain current status information (e.g., transmission or brakes), location information (e.g., lat, long, or elev), location movement information (e.g., speed, heading, angle, or accelSet), and location accuracy (e.g., accuracy) of a vehicle in which the first electronic device (e.g., electronic device 301) is equipped. For example, as shown in Table 1, the location accuracy may be divided into three items, i.e., semiMajor, semiMinor, and orientation. In another example regarding other message formats, the location accuracy may be represented in various forms such as a distance-based (m) form or an accuracy step (High, Mid, or Low) form. In an example, the BSM may also contain the location information of the first electronic device (e.g., the electronic device 301) corrected based on location information and a location record contained in a message (V2X message) provided from a second electronic device (e.g., an external device).

In an embodiment, the processor 211 of the first electronic device (e.g., the electronic device 201) carried by the user may generate a personal safety message (PSM), as shown in Table 2, containing the location information and accuracy information of the first electronic device (e.g., the electronic device 201). For example, Table 2 may include a structure of the PSM defined in the WAVE standard.

**[Table 2]**

| Personal Safety Message | | Description | Remark - SAE J2735 |
|---|---|---|---|
| basicType | | Designate the purpose of use of user device | - Pedestrian- Pedal_Cyclist |
| | | | - Public Safety Worker |
| | | | - Animal |
| secMark | | Dsecond (sec) | |
| msgCnt | | Message sequence number | |
| id | | Temporary ID | Random |
| Position | Latitude | Latitude, Longitude, Elevation | |
| | Longitude | | |
| | Elevation | | |
| Accuracy | semiMajor | Accuracy of ellipse major axis radius | |
| | semiMinor | Accuracy of ellipse minor axis radius | |
| | orientation | Accuracy of ellipse major axis rotation angle | |
| speed | | Speed | |
| heading | | Direction | |
| Optional Data element | | | |
| accelSet | | Wheel acceleration | |
| pathHistory | | Path history | |
| pathPrediction | | Path prediction | |
| propulsion | | Propulsion power source | - Human- Animal |
| | | | - Motocycle |
| useState | | Device usage status | - idle (smartphone screen off)-listeningToAudio |
| | | | - typing |
| | | | - calling |
| | | | - playingGames |
| | | | - reading |
| | | | - viewing |
| crossRequest | | Request for road crossing | VRU intention for road crossing |
| crossState | | State of toad crossing | |
| clusterSize | | Size of road crossing cluster | |
| clusterRadius | | Radius of road crossing cluster | |
| eventResponderType | | Public safety worker type | - towOperater- fireAndEMSWorker |
| | | | - aDOTWorker |
| | | | - lawEnforcement |
| | | | - hazmatResponder |
| | | | - animal Control Worker |
| activityType | | Working state of public safety worker | - working on road (construction, geological survey, garbage collection, location survey)- work setting (installing traffic lights, installing construction cones, installing flares) |
| | | | - working situation (treatment of injured, removal of dangerous goods, criminal investigation) |
| | | | - traffic control (signal control, lane control) |
| activitySubType | | Working details of public safety worker | - traffic control police officer- traffic control worker |
| | | | - train safety management worker |
| | | | - national guard for safety management |
| | | | - emergency relief worker (firefighter, emergency car) |
| | | | - highway towing and service worker |
| assistType | | Disabled type of disability | - visual impairment, hearing impairment, gait impairment, cognitive impairment |
| sizing | | Pedestrian height and behavior type | - short, tall- erratic moving, slow moving |
| attachment | | Object owned by VRU | - stroller, bicycle, cart, wheelchair, walking aid, puppy |
| attachmentRadius | | Size of object owned by VRU | |
| animal Type | | Animal type | - guide dog, police dog, pet dog, livestock |

For example, the PSM in Table 2 may contain essential data elements, such as a pedestrian type (e.g., basicType), a position (e.g., position), a direction (e.g., speed, heading), and a location accuracy (e.g., accuracy), and optional data elements such as a device usage status, a public safety worker type, pedestrian information, and object information. For example, as shown in Table 2, the location accuracy may be divided into three items, i.e., semiMajor, semiMinor, and orientation. In another example regarding other message formats, the location accuracy may be represented in various forms such as a distance-based (m) form or an accuracy step (High, Mid, or Low) form. For example, if the radius of the major axis and/or the minor axis of an ellipse (e.g., an error range of location estimation) exceeds a reference length, the location accuracy of the first electronic device may be determined to be relatively inaccurate. If the radius of the major axis and/or the minor axis of the ellipse does not exceed the reference length, the location accuracy of the first electronic device may be determined to be relatively accurate.

According to certain embodiments, at operation 507, the first electronic device (e.g., the processor 120, 211, or 311) and/or the V2X communication module 235 or 334 may transmit a message (e.g., a V2X message) including the location information and accuracy information of the first electronic device (e.g., the electronic device 201 or 301) to a second electronic device (e.g., an external device or a peripheral device). In an embodiment, the V2X communication module 235 may transmit the V2X message, generated by the processor 211, to the second electronic device (e.g., the external device or the peripheral device).

According to certain embodiments, the first electronic device (e.g., the electronic device 201 or 301) may periodically transmit, to the second electronic device (e.g., the external device or the peripheral device), the V2X message that contains at least one of the location information, accuracy information, or movement information of the first electronic device (e.g., the electronic device 201 or 301). For example, when an application program related to V2X is driven, the first electronic device (e.g., the electronic device 201 or 301) may periodically transmit the V2X message.

According to certain embodiments, when a state change (e.g., traffic jam or accident) of a vehicle in which the first electronic device (e.g., the electronic device 201 or 301) is equipped is detected, the first electronic device (e.g., the electronic device 201 or 301) may transmit, to the second electronic device (e.g., the external device or the peripheral device), the V2X message that contains at least one of the location information, accuracy information, or movement information of the first electronic device (e.g., the electronic device 201 or 301).

According to certain embodiments, the first electronic device (e.g., the electronic device 201 or 301) may determine the location accuracy of the first electronic device (e.g., the electronic device 201 or 301), based on the accuracy such as semiMajor, semiMinor, and orientation shown in Table 1 or Table 2. In an embodiment, semiMajor or semiMinor as the location accuracy of the first electronic device (e.g., the electronic device 201 or 301) may be divided into a plurality of steps, as exemplarily shown in Table 3, depending on a range (or length) of the major or minor axis radius. Points corresponding to such steps may be set respectively.

**[Table 3]**

| Evaluation | Point | Range (0 ~ 255) |
|---|---|---|
| Good | 5 | 0 ~ 100 |
| Normal | 3 | 101 ~ 254 |
| Bad | 1 | 255 |

Similarly, orientation as the location accuracy of the first electronic device (e.g., the electronic device 201 or 301) may be divided into a plurality of steps, as exemplarily shown in Table 4, depending on a range of the major axis rotation angle. Points corresponding to such steps may be set respectively.

**[Table 4]**

| Evaluation | Point | Range (0 ~ 66535) |
|---|---|---|
| Good | 5 | 0 ~ 10000 |
| Normal | 3 | 10001 ~ 33267 |
| Bad | 1 | 33268 ~ 66535 |

The processor 211 of the first electronic device (e.g., the electronic device 201 or 301) may determine the location accuracy of the first electronic device as shown in Table 5, based on the sum of points of semiMajor, semiMinor, and orientation.

**[Table 5]**

| Evaluation | Point |
|---|---|
| High | 15 |
| Mid | 8~14 |
| Low | 3 ~ 7 |

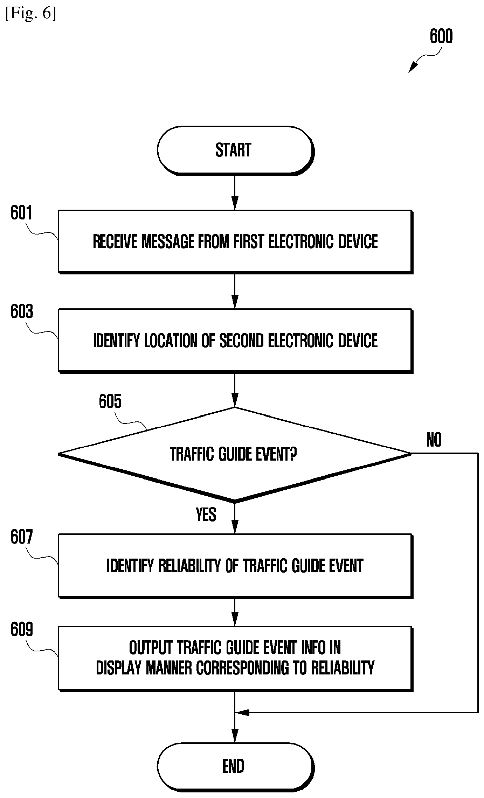

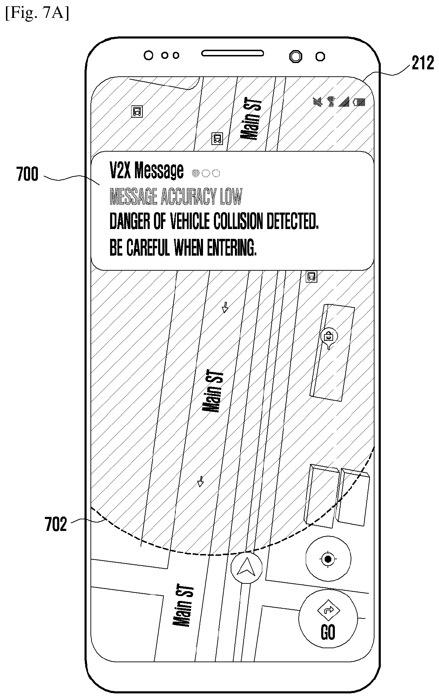

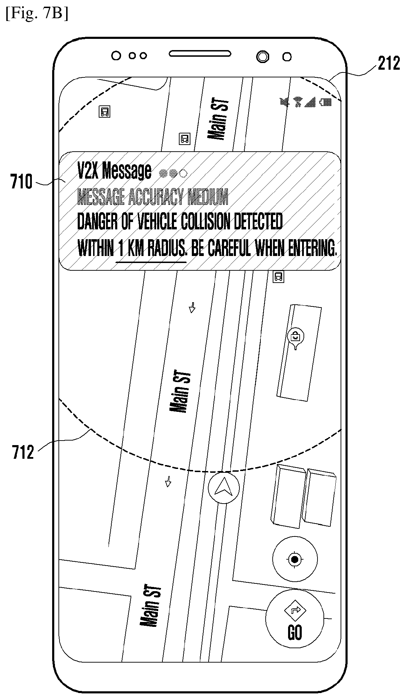

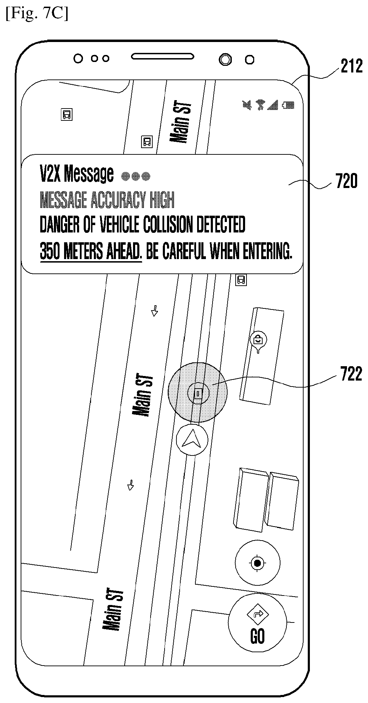

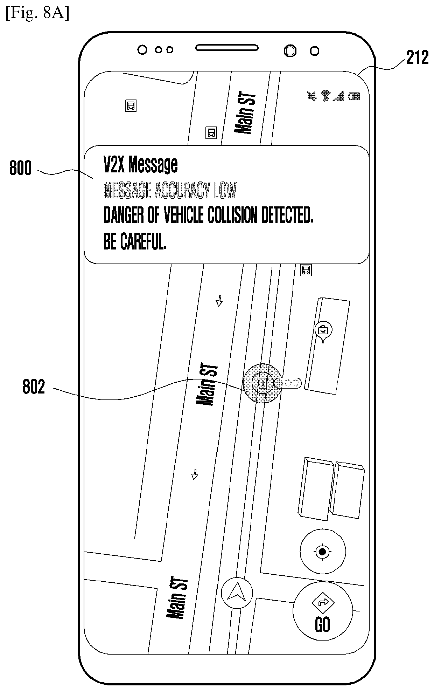

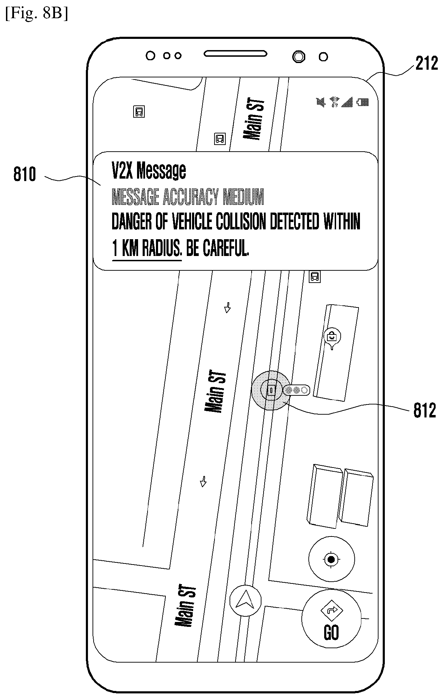

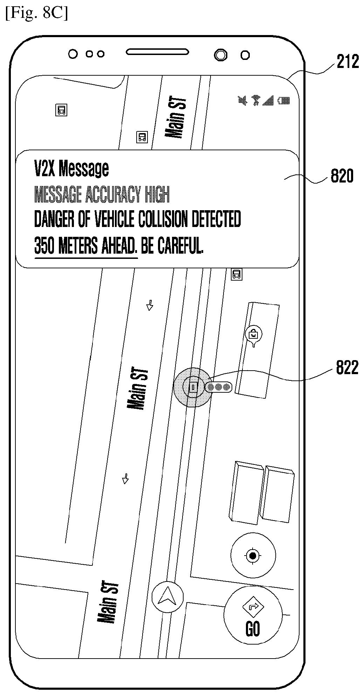

FIG. 6 is a flow diagram illustrating a process 600 of outputting traffic guide information at a second electronic device according to certain embodiments. In the flow diagram, respective operations corresponding to depicted blocks may be performed sequentially, but this is not necessary. For example, the order of such operations may be changed at least in part, and at least two operations may be performed in parallel or concurrently. In addition, at least one operation may be omitted if desired. A second electronic device of FIG. 6 may be the electronic device 101 of FIG. 1, the electronic device 201 of FIG. 2A, the electronic device 201 of FIG. 2B, or the electronic device 301 of FIG. 3. Hereinafter, at least some operations shown in FIG. 6 will be described with reference to FIGS. 7A to 7C and 8A to 8C. FIG. 7A is screenshots showing traffic guide information according to certain embodiments. FIG. 7B is screenshots showing traffic guide information according to certain embodiments. FIG. 7C is screenshots showing traffic guide information according to certain embodiments. FIG. 8A is screenshots showing traffic guide information according to certain embodiments. FIG. 8B is screenshots showing traffic guide information according to certain embodiments. FIG. 8C is screenshots showing traffic guide information according to certain embodiments.

Referring to FIG. 6, in certain embodiments, the second electronic device (e.g., the processor 120 in FIG. 1, the processor 211 in FIG. 2A, or the processor 311 in FIG. 3) may receive a message (e.g., a V2X message) from a first electronic device (e.g., an external device) at operation 601. In an embodiment, when an application program related to V2X is driven, the processor 211 (or the V2X communication module 235) may receive the V2X message from the first electronic device (e.g., the external device).

According to certain embodiments, at operation 603, the second electronic device (e.g., the processor 120, 211, or 311) may identify location information of the second electronic device (e.g., the electronic device 201 or 301). In an embodiment, the processor 211 may estimate a current location of the second electronic device (e.g., the electronic device 201 or 301) by using at least one of a location sensor (e.g., the GNSS module 231) or network information (e.g., Wi-Fi or cell information).

According to certain embodiments, at operation 605, the second electronic device (e.g., the processor 120, 211, or 311) may determine whether a traffic guide event has occurred, based on location information of the first electronic device (e.g., the external device) and location information of the second electronic device (e.g., the electronic device 201 or 301). In an embodiment, the processor 211 may determine a traffic guide event in the form of a possibility of collision between the first and second electronic devices, by comparison of the location and movement information (e.g., a moving direction and a moving speed) between the first and second electronic devices. When determining that there is a possibility of collision between the first and second electronic devices, the processor 211 may determine that an event (e.g., a traffic guide event) has occurred and traffic guide information related to the potential collision is to be displayed. In an embodiment, based on the location and movement information (e.g., movement direction) of the second electronic device, the processor 211 may determine whether the second electronic device is expected to enter an accident occurrence area of the first electronic device. If entry into the accident occurrence area is expected, the processor 211 may determine that an event (e.g., a traffic guide event) for displaying traffic guide information related to the accident of the first electronic device has occurred.

According to certain embodiments, when it is determined that a traffic guide event has not occurred (i.e., 'No' at the operation 605), the second electronic device (e.g., the processor 120, 211, or 311) may limit the output of information associated with the traffic guide event.

According to certain embodiments, when it is determined that a traffic guide event has occurred (i.e., 'YES' at the operation 605), the second electronic device (e.g., the processor 120, 211, or 311) may identify, at operation 607, the reliability of the traffic guide event. In an embodiment, the processor 211 may determine the reliability of the traffic guide event, based on the accuracy of the location information of the first electronic device (e.g., the external device) and the accuracy of the location information of the second electronic device (e.g., the electronic device 201 or 301). For example, the reliability of the traffic guide event may indicate a relationship between the traffic guide event and the second electronic device (e.g., the electronic device 201 or 301). Thus, as the accuracy of the location information of the first and second electronic devices is relatively high, it is determined that the reliability of the traffic guide event is also relatively high. For example, the reliability of the traffic guide event may be determined by applying a weight corresponding to the type of the traffic guide event to the accuracy of the location information of the first and second electronic devices. For example, in case of the traffic guide event related to a danger of collision, the weight corresponding to the type of the traffic guide event may be equally applied to the accuracy of the location information of the first and second electronic devices. In another example, in case of the traffic guide event related to the occurrence of a traffic accident, the weight corresponding to the type of the traffic guide event may be applied more highly to the accuracy of the location information of the first electronic device (e.g., the external device) subjected to an accident than to the accuracy of the location information of the second electronic device (e.g., the electronic device 201 or 301). For example, the accuracy of the location information of the second electronic device may be determined based on at least one of the type of a location recognition sensor (or a location recognition manner) used for location estimation, or the received signal strength used for location estimation.

According to certain embodiments, at operation 609, the second electronic device (e.g., the processor 120, 211, or 311) may output information related to the traffic guide event including an indicator(s) of the estimated reliability of the traffic guide event. In an embodiment, the processor 211 may control the display device 212 to display information related to the traffic guide event, with reliability indicated based on a brightness (or color, symbol, text, size, etc.) corresponding to the reliability of the traffic guide event, as shown in FIGS. 7A to 7C, so that the user can recognize the reliability of the traffic guide event. For example, when the reliability of the traffic guide event is of a first value, the display device 212 may display information 700 (e.g., a guidance message) related to the traffic guide event in a relatively first brightness (or a first color such as red) as shown in FIG. 7A. In addition, the display device 212 may roughly display a first range 702 associated with the traffic guide event. In another example, when the reliability of the traffic guide event is at a second value higher than the first value, the display device 212 may display information 710 related to the traffic guide event in a second brightness brighter than the first brightness (or a second color such as orange) as shown in FIG. 7B. In addition, the display device 212 may display a second range 712 associated with the traffic guide event, which is smaller than the first range 702 as it is more specific to the area. In still another example, when the reliability of the traffic guide event is estimated at a third value higher than the second level, the display device 212 may precisely display information 720 related to the traffic guide event in a third brightness brighter than the second brightness (or a third color such as green) as shown in FIG. 7C. In addition, the display device 212 may display a third range 722 associated with the traffic guide event, which is smaller than the second range 712, since it is even more specific and detailed in its warning. Meanwhile, such information 700, 710, or 720 related to the traffic guide event may contain warning messages of different contents depending on the reliability of the traffic guide event.

According to certain embodiments, the second electronic device (e.g., the electronic device 201 or 301) may determine a display manner for the traffic guide event, based on the accuracy (e.g., high, mid, or low) of location information contained in a message received from the first electronic device (e.g., the external device). In an embodiment, the processor 211 may control the display device 212 to display information related to the traffic guide event, based on color and brightness corresponding to the accuracy of the location information contained in the message 800 received from the first electronic device (e.g., the external device), as shown in FIGS. 8A to 8C. For example, when the accuracy of the location information contained in the received message is first value, the display device 212 may display information 800 related to the traffic guide event in a first color (e.g., red) as shown in FIG. 8A. In addition, the display device 212 may display a first range 802 associated with the traffic guide event in a first brightness. In another example, when the accuracy of the location information contained in the received message is medium second value higher than the first value, the display device 212 may display information 810 related to the traffic guide event in a second color (e.g., orange) as shown in FIG. 8B. In addition, the display device 212 may display a second range 812 associated with the traffic guide event at the second brightness brighter than the first brightness. In still another example, when the accuracy of the location information contained in the received message is relatively high, the display device 212 may display information 820 related to the traffic guide event in a third color (e.g., green) as shown in FIG. 8C. In addition, the display device 212 may display a range 822 associated with the traffic guide event in a third brightness brighter than the second brightness. Meanwhile, such information 800, 810, or 820 related to the traffic guide event may contain warning messages of different contents depending on the accuracy of the location information contained in the message received from the first electronic device (e.g., the external device).

According to certain embodiments, when there is at least one other message (e.g., a V2X message) associated with the first electronic device (e.g., the external device) or the second electronic device (e.g., the electronic device 201 or 301), the second electronic device (e.g., the electronic device 201 or 301) may update the reliability of the traffic guide event, based on at least one of the number or accuracy of the at least one other message. For example, if the location accuracy of a message received from the first electronic device (e.g., the external device) is a first value, and if another message having the accuracy of mid or high is received from a third electronic device (e.g., another external device) adjacent to the first electronic device (e.g., the external device), the processor 211 may update the location accuracy of the external device for determining the reliability of the traffic guide event to mid or high. In another example, if the location accuracy of the second electronic device (e.g., the electronic device 201 or 301) is a second value higher than the first value, and if another message having the first level of accuracy is received from a third electronic device (e.g., another external device) traveling in the same direction as the second electronic device (e.g., the electronic device 201 or 301), the processor 211 may further apply the location accuracy of the received message to determine the reliability of the traffic guide event.

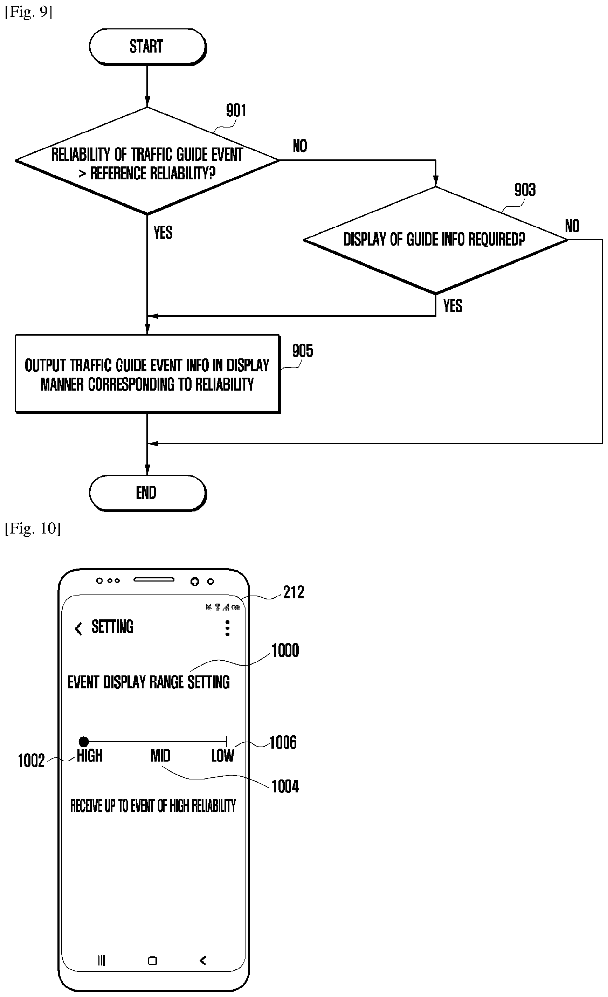

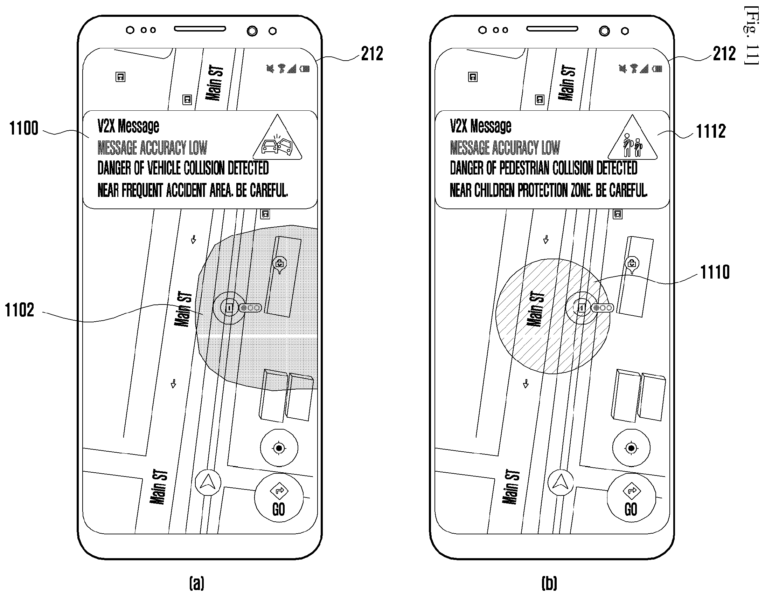

FIG. 9 is a flow diagram illustrating a process of outputting traffic guide information, including an indicator of estimated reliability, at an electronic device according to certain embodiments. Operations shown in FIG. 9 correspond to detailed operations of the above-described operation 609 in FIG. 6. In the flow diagram, respective operations corresponding to depicted blocks may be performed sequentially, but this is not necessary. For example, the order of such operations may be changed at least in part, and at least two operations may be performed in parallel or concurrently. In addition, at least one operation may be omitted if desired. A second electronic device of FIG. 9 may be the electronic device 101 of FIG. 1, the electronic device 201 of FIG. 2A, the electronic device 201 of FIG. 2B, or the electronic device 301 of FIG. 3. Hereinafter, at least some operations shown in FIG. 9 will be described with reference to FIGS. 10 and 11A-11B. FIG. 10 is a screenshot showing a screen for setting an output range of traffic guide information according to certain embodiments. FIG. 11A is a screenshot showing traffic guide information associated with particular areas according to certain embodiments. FIG. 11B is a screenshot showing traffic guide information associated with particular areas according to certain embodiments.

Referring to FIG. 9, in certain embodiments, when determining that the traffic guide event has occurred (i.e., 'YES' at the operation 605 in FIG. 6), the second electronic device (e.g., the processor 120 in FIG. 1, the processor 211 in FIG. 2A, or the processor 311 in FIG. 3) may check, at operation 901, whether the reliability of the traffic guide event exceeds a reference reliability. In an embodiment, the reference reliability may be predefined or set by the user. For example, the processor 211 may control the display device 212 to display a setting screen 1000 for setting an output range (e.g., the reference reliability) of the traffic guide event as shown in FIG. 10 so that the user can set the reference reliability. The processor 211 may set the output range of the traffic guide event to high 1002, mid 1004, or low 1006 in response to a selection input on the setting screen 1000. This may alter the background threshold values (e.g., numerical integer ratings of reliability) used to determine whether a traffic guide event is generated and warrants display.

According to certain embodiments, when the reliability of the traffic guide event does not exceed the reference reliability (i.e., 'No' at the operation 901), the second electronic device (e.g., the processor 120, 211, or 311) may determine, at operation 903, whether to display guide information based on the location information related to the traffic guide event. In an embodiment, if a location where the traffic guide event has occurred is included in a cautious driving area such as a frequent accident area, a construction spot, or a children protection zone, the processor 211 may determine to display the guide information.

According to certain embodiments, when determining that it is not necessary to display the guide information (i.e., 'No' at the operation 903), the second electronic device (e.g., the processor 120, 211, or 311) may limit the output of information related to the traffic guide event. In an embodiment, when the reliability of the traffic guide event is lower than the reference reliability, and when the location where the traffic guide event has occurred is not included in the cautious driving area, the processor 211 may determine that displaying the guide information is not necessary.

According to certain embodiments, when the reliability of the traffic guide event exceeds the reference reliability (i.e., 'YES' at the operation 901), or when determining to display the guide information (i.e., 'YES' at the operation 903), the second electronic device (e.g., the processor 120, 211, or 311) may output, at operation 905, information related to the traffic guide event in a display manner corresponding to the reliability of the traffic guide event. In an embodiment, when determining that displaying the guide information is to be executed, that is, when the location where the traffic guide event has occurred is included in the cautious driving area (e.g., a frequent accident area, a construction spot, or a children protection zone), the processor 211 may control the display device 212 to display, as shown in FIGS. 11A and 11B, information related to the traffic guide event regardless of the reference reliability. For example, when the occurrence location of the traffic guide event is included in the frequent accident area even though the reliability of the traffic guide event is a first value, the display device 212 may display, as shown in part FIG. 11A, information 1100 related to the traffic guide event in a first brightness (or a first color (e.g., red)) based on the reliability. In addition, the display device 212 may display a range 1102 associated with the traffic guide event, based on the frequent accident area, in a certain display manner (e.g., polygon) corresponding to the frequent accident area. In another example, when the occurrence location of the traffic guide event is included in the children protection zone even though the reliability of the traffic guide event is the first value, the display device 212 may display, as shown in part FIG. 11B, information 1110 related to the traffic guide event in a first brightness (or a first color (e.g., red)) based on the reliability. In addition, the display device 212 may display a range 1112 associated with the traffic guide event, based on the children protection zone, in a certain display manner (e.g., a hatched circle) corresponding to the children protection zone.

According to certain embodiments, the second electronic device (e.g., the electronic device 201 or 301) may also determine whether to display information related to the traffic guide event, based on the accuracy (e.g., respective values representing accuracy, such as integers) of the location information contained in the message received from the first electronic device (e.g., the external device). In an embodiment, when the accuracy of the location information contained in the received message exceeds a reference accuracy, the processor 211 may determine to display the traffic guide event. For example, the reference accuracy may be predefined or set by the user.

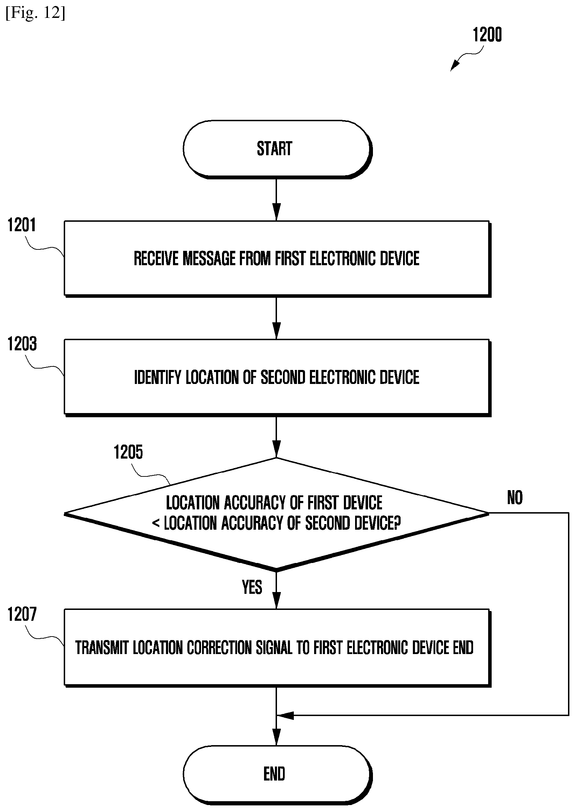

FIG. 12 is a flow diagram illustrating a process 1200 of transmitting a location correction signal at a second electronic device according to certain embodiments. In the flow diagram, respective operations corresponding to depicted blocks may be performed sequentially, but this is not necessary. For example, the order of such operations may be changed at least in part, and at least two operations may be performed in parallel or concurrently. In addition, at least one operation may be omitted if desired. A second electronic device of FIG. 12 may be the electronic device 101 of FIG. 1, the electronic device 201 of FIG. 2A, the electronic device 201 of FIG. 2B, or the electronic device 301 of FIG. 3.

Referring to FIG. 12, in certain embodiments, the second electronic device (e.g., the processor 120 in FIG. 1, the processor 211 in FIG. 2A, or the processor 311 in FIG. 3) may receive a message (e.g., a V2X message) from a first electronic device (e.g., an external device) at operation 1201. In an embodiment, the processor 211 (or the V2X communication module 235) may receive the V2X message from the first electronic device (e.g., the external device) while an application program related to V2X is driven.

According to certain embodiments, at operation 1203, the second electronic device (e.g., the processor 120, 211, or 311) may identify the location of the second electronic device (e.g., the electronic device 201 or 301). In an embodiment, the processor 211 may estimate the current location of the second electronic device (e.g., the electronic device 201 or 301) by using the GNSS module 231.

According to certain embodiments, at operation 1205, the second electronic device (e.g., the processor 120, 211, or 311) may check whether the accuracy of the location information of the first electronic device (e.g., the external device) is lower than the accuracy of the location information of the second electronic device (e.g., the electronic device 201 or 301). For example, the accuracy of the location information of the first electronic device (e.g., the external device) may be contained in the message received from the first electronic device. For example, the accuracy of the location information of the second electronic device (e.g., the electronic device 201 or 301) may be determined based on the type of a location sensor (or a location estimation manner) used to estimate the location information by the second electronic device.

According to certain embodiments, when the accuracy of the location information of the first electronic device is equal to or higher than the accuracy of the location information of the second electronic device (i.e., 'No' at the operation 1205), the second electronic device (e.g., the processor 120, 211, or 311) may determine that the location of the first electronic device cannot be corrected using the location information of the second electronic device.

According to certain embodiments, when the accuracy of the location information of the first electronic device is lower than the accuracy of the location information of the second electronic device (i.e., 'YES' at the operation 1205), the second electronic device (e.g., the processor 120, 211, or 311) may transmit the location information of the second electronic device (e.g., the electronic device 201 or 301) to the first electronic device (e.g., the external device) at operation 1207. In an embodiment, when the accuracy of the location information of the first electronic device is lower than that of the second electronic device, the processor 211 may determine that the location of the first electronic device can be corrected using the location information of the second electronic device. Thus, the processor 211 may control the V2X communication module 235 to transmit a location correction signal containing the location information of the second electronic device (e.g., the electronic device 201 or 301) to the first electronic device (e.g., the external device).

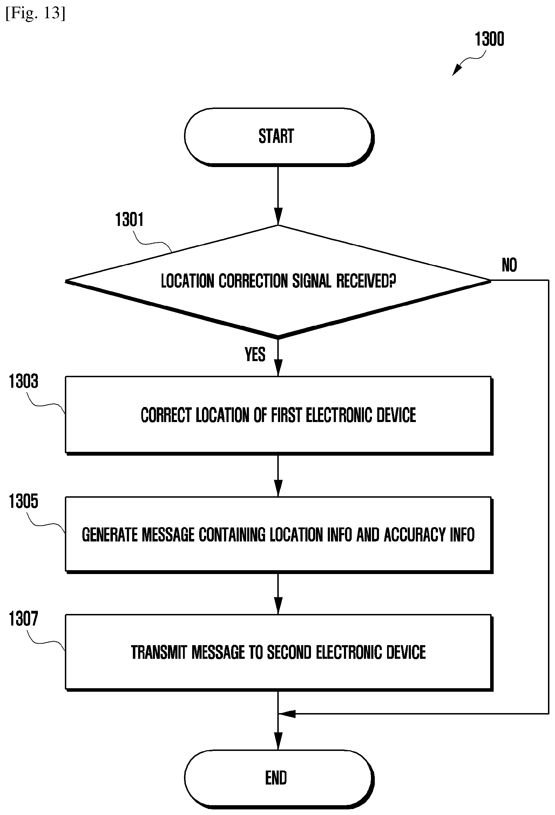

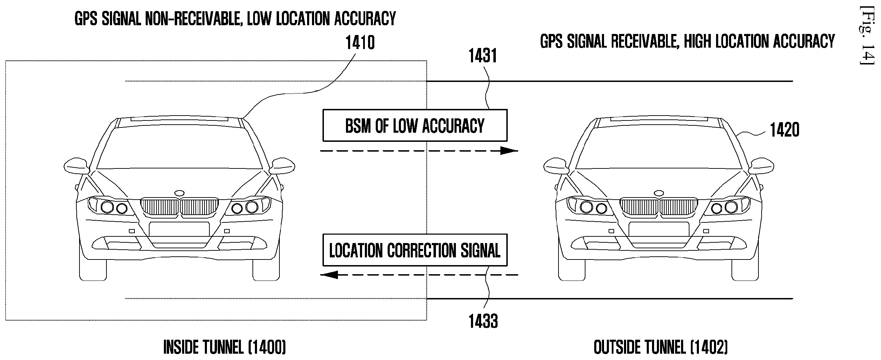

FIG. 13 is a flow diagram illustrating a process 1300 of correcting a location at a first electronic device according to certain embodiments. Operations shown in FIG. 13 are of the first electronic device corresponding to those of the second electronic device shown in FIG. 12. In the flow diagram, respective operations corresponding to depicted blocks may be performed sequentially, but this is not necessary. For example, the order of such operations may be changed at least in part, and at least two operations may be performed in parallel or concurrently. In addition, at least one operation may be omitted if desired. The first electronic device of FIG. 13 may be the electronic device 101 of FIG. 1, the electronic device 201 of FIG. 2A, the electronic device 201 of FIG. 2B, or the electronic device 301 of FIG. 3. Hereinafter, at least some operations shown in FIG. 13 will be described with reference to FIG. 14. FIG. 14 is a diagram illustrating an example of correcting a location of an electronic device located in a tunnel according to certain embodiments.

Referring to FIG. 13, in certain embodiments, the first electronic device (e.g., the processor 120 in FIG. 1, the processor 211 in FIG. 2A, or the processor 311 in FIG. 3) may check, at operation 1301, whether a location correction signal is received from a second electronic device (e.g., an external device). In an embodiment, when the first electronic device (e.g., the electronic device 201 or 301) equipped in a first vehicle 1410 is located in the inside 1400 of a tunnel as shown in FIG. 14, the first electronic device may estimate the location with a relatively low accuracy by failing to receive a GPS signal or receiving a relatively weak GPS signal. In this case, the first electronic device may transmit a V2X message 1431 (e.g., BSM) containing low-accuracy location information to the second electronic device. On the other hand, when the second electronic device (e.g., the external device) equipped in a second vehicle 1420 is located in the outside 1402 of the tunnel as shown in FIG. 14, the second electronic device may estimate the location with a relatively high accuracy by receiving a relatively strong GPS signal. In this case, the second electronic device may transmit the location correction signal 1433 containing the location information of the second electronic device to the first electronic device as described above at the operations 1201 to 1207 in FIG. 12.

According to certain embodiments, when the location correction signal is not received (i.e., 'No' at the operation 1301), the first electronic device (e.g., the processor 120, 211, or 311) may determine that the location of the first electronic device (e.g., the electronic device 201 or 301) cannot be corrected using the location information of the second electronic device (e.g., the external device).

According to certain embodiments, when the location correction signal is received (i.e., 'YES' at the operation 1301), the first electronic device (e.g., the processor 120, 211, or 311) may correct, at operation 1303, the location of the first electronic device (e.g., the electronic device 201 or 301), based on the location information of the second electronic device (e.g., the external device). In an embodiment, when receiving the BSM from the second electronic device (e.g., the external device, the second vehicle 1420), the first electronic device (e.g., the electronic device 201 or 301, the first vehicle 1410) may broadcast a measurement request signal around it. For example, the measurement request signal may include a signal for requesting any entity to provide a relative distance or direction from the first electronic device. The first electronic device may correct the location thereof, based on the location information received from the second electronic device and/or a relative distance or direction of a third electronic device (e.g., another external device) received in response to the measurement request signal. For example, the location information of the second electronic device may be contained in the location correction signal received from the second electronic device.

According to certain embodiments, at operation 1305, the first electronic device (e.g., the processor 120, 211, or 311) may generate a message that contains the corrected location information and accuracy of the first electronic device (e.g., the electronic device 201 or 301). In an embodiment, the first electronic device equipped in the first vehicle 1410 of FIG. 14 may generate the BSM containing the location information and accuracy corrected based on the location information received from the second electronic device equipped in the second vehicle 1420. For example, the accuracy of the location information may be determined based on the type of the location recognition sensor (or location recognition manner) of the first electronic device (e.g., the electronic device 201 or 301) and/or the accuracy of the location information of the second electronic device (e.g., the external device) used for the correction of the location information.

According to certain embodiments, at operation 1307, the first electronic device (e.g., the processor 120, 211, or 311) may transmit the message containing the corrected location information and accuracy of the first electronic device (e.g., the electronic device 201 or 301) to the second electronic device (e.g., the external device). In an embodiment, the first electronic device equipped in the first vehicle 1410 of FIG. 14 may transmit, to the second electronic device equipped in the second vehicle 1420, the generated BSM that contains the location information and accuracy corrected based on the location information received from the second electronic device.

According to certain embodiments, the second electronic device (equipped in the second vehicle 1420) may measure a distance and direction to the first electronic device (equipped in the first vehicle 1410) by using a communication technique (or sensor), such as UWB, capable of measuring a distance and direction between devices. In addition, the second electronic device may generate the BSM containing a relative distance and direction to the first electronic device and/or identification information of the second electronic device, and then transmit the generated BSM to the first electronic device. In an embodiment, the first electronic device may correct the location thereof, based on at least one of the relative distance or relative direction contained in the BSM received from the second electronic device. For example, the first electronic device may identify the second electronic device, based on the identification information contained in the received BSM.

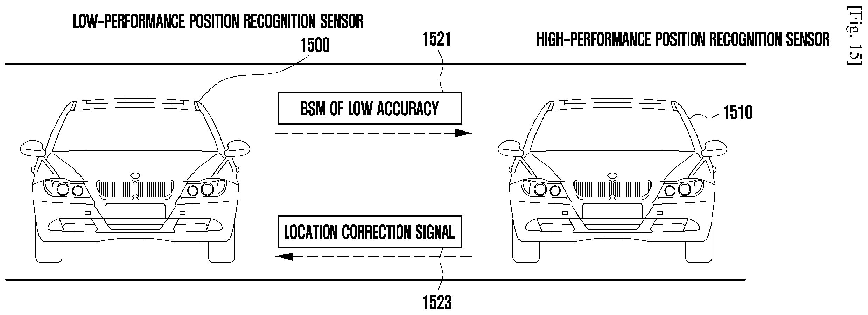

FIG. 15 is a diagram illustrating an example of correcting a location of an electronic device including a low-performance location recognition sensor according to certain embodiments. In the following description, it is assumed that a first vehicle 1500 and a second vehicle 1510 are located within a distance capable of transmitting and receiving V2X messages.

Referring to FIG. 15, in certain embodiments, the first vehicle 1500 (or the first electronic device) may include a low-performance location recognition sensor, and the second vehicle 1510 (or the second electronic device) may include a high-performance location recognition sensor. In an embodiment, the first vehicle 1500 (or the first electronic device) may obtain the location information thereof estimated through the low-performance location recognition sensor when an application program related to V2X is driven, and then transmit a V2X message 1521 (e.g., a BSM) containing the estimated location information to the second vehicle 1510 (or the second electronic device). Because of the inclusion of the high-performance location recognition sensor, the second vehicle 1510 (or the second electronic device) may estimate the location with a higher accuracy than the first vehicle 1500 (or the first electronic device). In this case, the second vehicle 1510 (or the second electronic device) may transmit a location correction signal 1523 including the location information thereof to the first vehicle 1500 (or the first electronic device) for location correction of the first vehicle 1500 (or the first electronic device) as described above at the operations 1201 to 1207 in FIG. 12. Then, based on the location information of the second vehicle 1510 (or the second electronic device) received from the second vehicle 1510 (or the second electronic device), the first vehicle 1500 (or the first electronic device) may update the location information thereof. In addition, the first vehicle 1500 (or the first electronic device) and/or the second vehicle 1510 (or the second electronic device) may measure a relative distance and direction to the other vehicle. For example, the second vehicle 1510 (or the second electronic device) may measure a relative distance and direction to the first vehicle 1500 (or the first electronic device) by using a UWB communication technique. In this case, the second vehicle 1510 (or the second electronic device) may transmit the measured relative distance and direction to the first vehicle 1500 (or the first electronic device) through the BSM. Then, the first vehicle 1500 (or the first electronic device) may correct the location thereof, based on the relative distance, relative direction, and location information of the second vehicle 1510 (or the second electronic device).

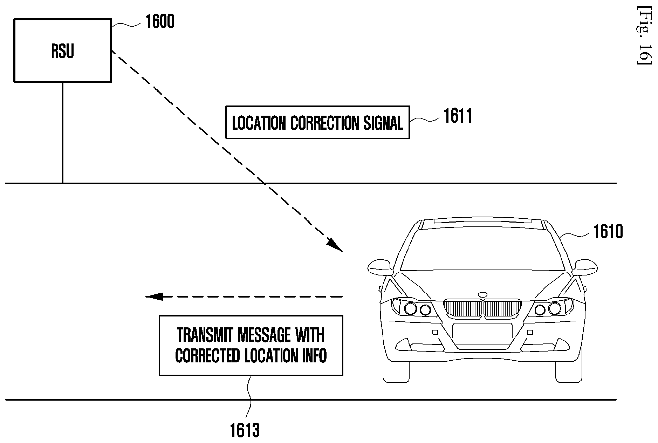

FIG. 16 is a diagram illustrating an example of correcting a location of an electronic device, based on a road side unit (RSU), according to certain embodiments. In the following description, it is assumed that the RSU 1600 and a vehicle 1610 are located within a distance capable of transmitting and receiving V2X messages.

Referring to FIG. 16, in certain embodiments, the RSU 1600 for transmitting and receiving V2X messages in a road infrastructure is installed at a fixed location, thereby transmitting a message containing accurate location information (i.e., a location correction signal 1611). The vehicle 1610 (or the first electronic device) may receive the location correction signal 1611 from the RSU 1600 and, based on the received signal 1611, correct estimated location information thereof. Then, the vehicle 1610 (or the first electronic device) may broadcast, to nearby vehicles, a V2X message 1613 containing location information corrected based on the location of the RSU 1600. In an embodiment, at least one of the RSU 1600 or the vehicle 1610 (or the first electronic device) may measure a relative distance and direction to the other entity. For example, the vehicle 1610 (or the first electronic device) may measure a relative distance and direction to the RSU 1600 by using a UWB communication technique. The vehicle 1610 (or the first electronic device) may correct the location thereof, based on the relative distance, relative direction, and location information of the RSU 1600.

According to certain embodiments of the disclosure, an operating method of an electronic device (e.g., the electronic device 101 in FIG. 1, the electronic device 201 in FIG. 2A, the electronic device 201 in FIG. 2B, or the electronic device 301 in FIG. 3) may include receiving a vehicle-to-everything (V2X) message from another electronic device; determining, based on location information of the another electronic device contained in the V2X message and location information of the electronic device, whether a traffic guide event has occurred; checking, in response to occurrence of the traffic guide event, a reliability of the traffic guide event, based on at least one of an accuracy of the location information of the another electronic device or an accuracy of the location information of the electronic device; and displaying information related to the traffic guide event in a display manner corresponding to the reliability of the traffic guide event.

According to certain embodiments, the accuracy of the location information of the another electronic device may be contained in the received V2X message.

According to certain embodiments, the accuracy of the location information of the electronic device may be checked, based on a type of a location recognition sensor used for estimating the location of the electronic device, or based on a type of a location estimation manner.

According to certain embodiments, the V2X message may contain at least one of the location information of, accuracy information of the location information of, or movement information of the another electronic device.

According to certain embodiments, displaying the information related to the traffic guide event may include, in case that the reliability of the traffic guide event satisfies a predetermined condition, displaying the information related to the traffic guide event in the display manner corresponding to the reliability of the traffic guide event.

According to certain embodiments, the predetermined condition may include a level of the reliability of the traffic guide event for displaying the information related to the traffic guide event.

According to certain embodiments, displaying the information related to the traffic guide event may include determining whether a location associated with the traffic guide event is included in a cautious driving area, and in response to determining that the location associated with the traffic guide event is included in the cautious driving area, displaying the information related to the traffic guide event in the display manner corresponding to the reliability of the traffic guide event regardless of the predetermined condition.

According to certain embodiments, checking the reliability of the traffic guide event may include determining whether there is another V2X message related to the V2X message received from the another electronic device, and checking, in response to determining that there is the another V2X message, the reliability of the traffic guide event, based on the another V2X message, the V2X message, and the location information of the electronic device.

According to certain embodiments, displaying the information related to the traffic guide event may include displaying a warning message associated with the traffic guide event, based on at least one of color, symbol, size, or brightness corresponding to the reliability of the traffic guide event.

According to certain embodiments of the disclosure, when the traffic guide event occurs, the electronic device that supports the V2X technology may determine the reliability of the traffic guide event, based on at least one of the accuracy of location information received from an external electronic device or the accuracy of location information of the electronic device, and then output information related to the traffic guide event in a display manner corresponding to the reliability of the traffic guide event. Therefore, the user of the electronic device can recognize the reliability of the information related to the traffic guide event.

According to certain embodiments, the electronic device that supports the V2X technology may correct location information thereof based on location information received from an external electronic device, thereby improving the accuracy of the location information thereof.

While the disclosure has been particularly shown and described with reference to example embodiments thereof, it will be understood by those skilled in the art that various changes in form and details may be made therein without departing from the subject matter as defined by the appended claims.

## Claims

1. An electronic device (101, 201, 301) comprising:
a display device (160, 212, 314);
a wireless communication circuit (192, 235, 330) supporting vehicle-to-everything, V2X, communication; and
at least one processor (120, 211, 311) operatively connected to the display device (160, 212, 314) and the wireless communication circuit (192, 235, 330),
wherein the at least one processor (120, 211, 311) is configured to:
receive (601) a V2X message from an external electronic device through the wireless communication circuit (192, 235, 330), wherein the V2X message includes a location of the external electronic device and an accuracy of the location of the external electronic device,
identify (603) a present location of the electronic device (101, 201, 301) and an accuracy information of the present location of the electronic device (101, 201, 301),
determine (605), based on the location of the external electronic device, the present location of the electronic device and movement information of the electronic device, whether a traffic guide event related to information included in the V2X message has occurred,
in response to determining that the traffic guide event has occurred, determine (607) a reliability of the traffic guide event by applying respective weights, which correspond to a type of the traffic guide event, to the accuracy of the location of the external electronic device and the accuracy of the present location of the electronic device, and
output (609), via the display device, information related to the traffic guide event including an indication of the determined reliability of the traffic guide event.

2. The electronic device (101, 201, 301) of claim 1, wherein the at least one processor (120, 211, 311) is further configured to detect the accuracy of the present location of the electronic device (101, 201, 301), based on at least one of:
a type of a location recognition sensor used to estimate the present location of the electronic device (101, 201, 301), or a type of location estimation process used to estimate the present location.

3. The electronic device (101, 201, 301) of claim 1, wherein the information related to the traffic guide event is outputted when the determined reliability of the traffic guide event satisfies a predetermined condition.

4. The electronic device (101, 201, 301) of claim 3, wherein the at least one processor (120, 211, 311) is further configured to:
determine whether a location associated with the traffic guide event is disposed within a geographic location predesignated as a cautious driving area,
wherein the information related to the traffic guide event is outputted irrespective of whether the determined reliability of the traffic guide event satisfies the predetermined condition when the traffic guide event is disposed in the cautious driving area.

5. The electronic device (101, 201, 301) of claim 1, wherein the indication of the determined reliability of the traffic guide event includes a warning message, and
wherein the indication varies in color, symbol, size and/or brightness depending on the determined reliability.

6. The electronic device (101, 201, 301) of claim 1, wherein the at least one processor (120, 211, 311) is further configured to:
determine a range associated with the traffic guide event based on the determined reliabil ity of the traffic guide event,
display, via the display device (160, 212, 314), the information related to the traffic guide event based on the determined range associated with the traffic guide event.

7. An operating method of an electronic device (101, 201, 301), the method comprising:
receiving (601), by wireless communication circuitry (192, 235, 330) of the electronic device (101, 201, 301), a vehicle-to-everything, V2X, message from an external electronic device, wherein the V2X message includes a location of the external electronic device and an accuracy of the location of the external electronic device;
identifying (603) a present location of the electronic device (101, 201, 301) and an accuracy information of the present location of the electronic device (101, 201, 301),
determining (605), by at least one processor (120, 211, 311) of the electronic device (101, 201, 301), whether a traffic guide event related to information included in the V2X message has occurred based on the location of the external electronic device, the present location of the electronic device and movement information of the electronic device;
in response to determining that the traffic guide event has occurred, determining (607), by the at least one processor (120, 211, 311), a reliability of the traffic guide event by applying respective weights, which correspond to a type of the traffic guide event, to the accuracy of the location of the external electronic device and the accuracy of the present location of the electronic device (101, 201, 301); and
outputting (609), via a display device (160, 212, 314) of the electronic device (101, 201, 301), information related to the traffic guide event including an indication of the determined reliability of the traffic guide event.

8. The method of claim 7, further comprising:
detecting the accuracy of the present location of the electronic device (101, 201, 301), based on at least one of: a type of a location recognition sensor used to estimate the present location of the electronic device (101, 201, 301), or a type of location estimation process used to estimate the present location.

9. The method of claim 7, wherein the information related to the traffic guide event is outputted when the determined reliability of the traffic guide event satisfies a predetermined condition.

10. The method of claim 9, further comprising determining whether a location associated with the traffic guide event is disposed within a geographic location predesignated as a cautious driving area,
wherein the information related to the traffic guide event is outputted irrespective of whether the determined reliability of the traffic guide event satisfies the predetermined condition when the traffic guide event is disposed in the cautious driving area.

11. The method of claim 7, wherein the indication of the determined reliability of the traffic guide event includes a warning message, and wherein the indication varies in color, symbol, size and/or brightness depending on the determined reliability.

12. The method of claim 7, wherein the outputting information related to the traffic guide event comprises:
determining a range associated with the traffic guide event based on the determined reliab ility of the traffic guide event,
displaying the information related to the traffic guide event based on the determined rang e associated with the traffic guide event.

## Patentansprüche

1. Elektronische Vorrichtung (101, 201, 301), die Folgendes umfasst:
eine Anzeigevorrichtung (160, 212, 314);
eine drahtlose Kommunikationsschaltung (192, 235, 330), die die Fahrzeug-zu-Alles-, V2X-,Kommunikation unterstützt; und
mindestens einen Prozessor (120, 211, 311), der betriebsfähig mit der Anzeigevorrichtung (160, 212, 314) und der drahtlosen Kommunikationsschaltung (192, 235, 330) verbunden ist,
wobei der mindestens eine Prozessor (120, 211, 311) konfiguriert ist zum:
Empfangen (601) einer V2X-Nachricht von einer externen elektronischen Vorrichtung über die drahtlose Kommunikationsschaltung (192, 235, 330), wobei die V2X-Nachricht einen Standort der externen elektronischen Vorrichtung und eine Genauigkeit des Standorts der externen elektronischen Vorrichtung beinhaltet,
Identifizieren (603) eines gegenwärtigen Standorts der elektronischen Vorrichtung (101, 201, 301) und einer Genauigkeitsinformation über den gegenwärtigen Standort der elektronischen Vorrichtung (101, 201, 301),
basierend auf dem Standort der externen elektronischen Vorrichtung, dem aktuellen Standort der elektronischen Vorrichtung und den Bewegungsinformationen der elektronischen Vorrichtung, Bestimmen (605), ob ein Verkehrsleitereignis in Bezug auf die in der V2X-Nachricht enthaltenen Informationen aufgetreten ist,
als Reaktion auf die Feststellung, dass das Verkehrsleitereignis eingetreten ist, Bestimmen (607) einer Zuverlässigkeit des Verkehrsleitereignisses durch Anwenden jeweiliger Gewichtungen, die einer Art des Verkehrsleitereignisses entsprechen, auf die Genauigkeit des Standorts der externen elektronischen Vorrichtung und die Genauigkeit des gegenwärtigen Standorts der elektronischen Vorrichtung, und
Ausgeben (609), über die Anzeigevorrichtung, von Informationen, die sich auf das Verkehrsleitereignis beziehen und eine Anzeige der bestimmten Zuverlässigkeit des Verkehrsleitereignisses beinhalten.

2. Elektronische Vorrichtung (101, 201, 301) nach Anspruch 1, wobei der mindestens eine Prozessor (120, 211, 311) ferner konfiguriert ist, um die Genauigkeit des gegenwärtigen Standorts der elektronischen Vorrichtung (101, 201, 301) basierend auf mindestens einem von Folgendem zu erfassen:
einem Typ eines Standorterkennungssensors, der zur Schätzung des gegenwärtigen Standorts der elektronischen Vorrichtung (101, 201, 301) verwendet wird, oder einem Typ eines Standortschätzungsverfahrens, das zur Schätzung des gegenwärtigen Standorts verwendet wird.

3. Elektronische Vorrichtung (101, 201, 301) nach Anspruch 1, wobei die auf das Verkehrsleitereignis bezogene Information ausgegeben wird, wenn die bestimmte Zuverlässigkeit des Verkehrsleitereignisses eine vorbestimmte Bedingung erfüllt.

4. Elektronische Vorrichtung (101, 201, 301) nach Anspruch 3, wobei der mindestens eine Prozessor (120, 211, 311) ferner konfiguriert ist zum:
Bestimmen, ob ein Standort, der dem Verkehrsleitereignis zugeordnet ist, innerhalb eines geografischen Standorts liegt, der als vorsichtiges Fahrgebiet vorbestimmt ist,
wobei die auf das Verkehrsleitereignis bezogene Information unabhängig davon ausgegeben wird, ob die bestimmte Zuverlässigkeit des Verkehrsleitereignisses die vorbestimmte Bedingung erfüllt, wenn das Verkehrsleitereignis in dem vorsichtigen Fahrbereich angeordnet ist.

5. Elektronische Vorrichtung (101, 201, 301) nach Anspruch 1, wobei die Anzeige der bestimmten Zuverlässigkeit des Verkehrsleitereignisses eine Warnmeldung beinhaltet, und
wobei die Anzeige je nach der bestimmten Zuverlässigkeit in Farbe, Symbol, Größe und/oder Helligkeit variiert.

6. Elektronische Vorrichtung (101, 201, 301) nach Anspruch 1, wobei der mindestens eine Prozessor (120, 211, 311) ferner konfiguriert ist zum:
Bestimmen eines Bereichs, der dem Verkehrsleitereignis zugeordnet ist, basierend a uf der bestimmen Zuverlässigkeit des Verkehrsleitereignisses,
Anzeigen, über die Anzeigevorrichtung (160, 212, 314), der Informationen, die sic h auf das Verkehrsleitereignis beziehen, basierend auf dem bestimmten Bereich, der dem Verkehrsleitereignis zugeordnet ist.

7. Betriebsverfahren einer elektronischen Vorrichtung (101, 201, 301), wobei das Verfahren Folgendes umfasst:
Empfangen (601), durch eine drahtlose Kommunikationsschaltung (192, 235, 330) der elektronischen Vorrichtung (101, 201, 301), einer Fahrzeug-zu-Alles,-, V2X-, Nachricht von einer externen elektronischen Vorrichtung, wobei die V2X-Nachricht einen Standort der externen elektronischen Vorrichtung und eine Genauigkeit des Standorts der externen elektronischen Vorrichtung umfasst;
Identifizieren (603) eines gegenwärtigen Standorts der elektronischen Vorrichtung (101, 201, 301) und einer Genauigkeitsinformation über den gegenwärtigen Standort der elektronischen Vorrichtung (101, 201, 301),
Bestimmen (605), durch mindestens einen Prozessor (120, 211, 311) der elektronischen Vorrichtung (101, 201, 301), ob ein Verkehrsleitereignis, das sich auf in der V2X-Nachricht enthaltene Informationen bezieht, basierend auf dem Standort der externen elektronischen Vorrichtung, dem aktuellen Standort der elektronischen Vorrichtung und Bewegungsinformationen der elektronischen Vorrichtung aufgetreten ist;
als Reaktion auf die Feststellung, dass das Verkehrsleitereignis eingetreten ist, Bestimmen (607), durch den mindestens einen Prozessor (120, 211, 311), einer Zuverlässigkeit des Verkehrsleitereignisses durch Anwenden jeweiliger Gewichtungen, die einer Art des Verkehrsleitereignisses entsprechen, auf die Genauigkeit des Standorts der externen elektronischen Vorrichtung und die Genauigkeit des gegenwärtigen Standorts der elektronischen Vorrichtung (101, 201, 301); und
Ausgeben (609), über eine Anzeigevorrichtung (160, 212, 314) der elektronischen Vorrichtung (101, 201, 301), von Informationen, die sich auf das Verkehrsleitereignis beziehen und eine Anzeige der bestimmten Zuverlässigkeit des Verkehrsleitereignisses beinhalten.

8. Verfahren nach Anspruch 7, ferner umfassend:
Erfassen der Genauigkeit des gegenwärtigen Standorts der elektronischen Vorrichtung (101, 201, 301), basierend auf mindestens einem von Folgendem: einem Typ eines Standorterkennungssensors, der zur Schätzung des gegenwärtigen Standorts der elektronischen Vorrichtung (101, 201, 301) verwendet wird, oder einem Typ eines Standortschätzungsverfahrens, das zur Schätzung des gegenwärtigen Standorts verwendet wird.

9. Verfahren nach Anspruch 7, wobei die auf das Verkehrsleitereignis bezogene Information ausgegeben wird, wenn die bestimmte Zuverlässigkeit des Verkehrsleitereignisses eine vorbestimmte Bedingung erfüllt.

10. Verfahren nach Anspruch 9, ferner umfassend das Bestimmen, ob ein Standort, der dem Verkehrsleitereignis zugeordnet ist, innerhalb eines geografischen Standorts liegt, der als vorsichtiges Fahrgebiet vorbestimmt ist,
wobei die auf das Verkehrsleitereignis bezogene Information unabhängig davon ausgegeben wird, ob die bestimmte Zuverlässigkeit des Verkehrsleitereignisses die vorbestimmte Bedingung erfüllt, wenn das Verkehrsleitereignis in dem vorsichtigen Fahrbereich angeordnet ist.

11. Verfahren nach Anspruch 7, wobei die Anzeige der bestimmten Zuverlässigkeit des Verkehrsleitereignisses eine Warnmeldung umfasst und wobei die Anzeige in Abhängigkeit von der bestimmten Zuverlässigkeit in Farbe, Symbol, Größe und/oder Helligkeit variiert.

12. Verfahren nach Anspruch 7, wobei das Ausgeben von Informationen, die sich auf das Verkehrsleitereignis beziehen, Folgendes umfasst:
Bestimmen eines Bereichs, der dem Verkehrsleitereignis zugeordnet ist, basierend a uf der bestimmen Zuverlässigkeit des Verkehrsleitereignisses,
Anzeigen der Informationen, die sich auf das Verkehrsleitereignis beziehen, basiere nd auf dem bestimmten Bereich, der dem Verkehrsleitereignis zugeordnet ist.

## Revendications

1. Dispositif électronique (101, 201, 301), comprenant :
un dispositif d'affichage (160, 212, 314) ;
un circuit de communication sans fil (192, 235, 330) prenant en charge la communication de véhicule à tout, V2X ; et
au moins un processeur (120, 211, 311) connecté de manière opérationnelle au dispositif d'affichage (160, 212, 314) et au circuit de communication sans fil (192, 235, 330),
dans lequel l'au moins un processeur (120, 211, 311) est configuré pour :
recevoir (601) un message V2X d'un dispositif électronique externe par l'intermédiaire du circuit de communication sans fil (192, 235, 330), le message V2X comprenant un lieu du dispositif électronique externe et une précision du lieu du dispositif électronique externe,
identifier (603) un lieu actuel du dispositif électronique (101, 201, 301) et une information de précision du lieu actuel du dispositif électronique (101, 201, 301),
déterminer (605), en se basant sur le lieu du dispositif électronique externe, le lieu actuel du dispositif électronique et les informations de mouvement du dispositif électronique, si un événement de guidage de trafic lié aux informations incluses dans le message V2X s'est produit,
en réponse à la détermination que l'événement de guidage de trafic s'est produit, déterminer (607) une fiabilité de l'événement de guidage de trafic en appliquant des pondérations respectives, qui correspondent à un type d'événement de guidage de trafic, à la précision du lieu du dispositif électronique externe et à la précision du lieu actuel du dispositif électronique, et
sortir (609), via le dispositif d'affichage, des informations relatives à l'événement de guidage de trafic comprenant une indication de la fiabilité déterminée de l'événement de guidage de trafic.

2. Dispositif électronique (101, 201, 301) de la revendication 1, dans lequel l'au moins un processeur (120, 211, 311) est en outre configuré pour détecter la précision du lieu actuel du dispositif électronique (101, 201, 301), sur la base d'au moins l'un de ce qui suit :
un type de capteur de reconnaissance de lieu utilisé pour estimer le lieu actuel du dispositif électronique (101, 201, 301), ou un type de processus d'estimation de lieu utilisé pour estimer le lieu actuel.

3. Dispositif électronique (101, 201, 301) de la revendication 1, dans lequel les informations relatives à l'événement de guidage de trafic sont émises lorsque la fiabilité déterminée de l'événement de guidage de trafic satisfait à une condition prédéterminée.

4. Dispositif électronique (101, 201, 301) de la revendication 3, dans lequel l'au moins un processeur (120, 211, 311) est en outre configuré pour :
déterminer si un lieu associé à l'événement de guidage de trafic est disposé dans un lieu géographique prédéfini comme zone de conduite prudente,
dans lequel les informations relatives à l'événement de guidage de trafic sont émises indépendamment du fait que la fiabilité déterminée de l'événement de guidage de trafic satisfasse ou non à la condition prédéterminée lorsque l'événement de guidage de trafic est disposé dans la zone de conduite prudente.

5. Dispositif électronique (101, 201, 301) de la revendication 1, dans lequel l'indication de la fiabilité déterminée de l'événement de guidage de trafic comprend un message d'avertissement, et
dans lequel l'indication varie en couleur, en symbole, en taille et/ou en luminosité en fonction de la fiabilité déterminée.

6. Dispositif électronique (101, 201, 301) de la revendication 1, dans lequel l'au moi ns un processeur (120, 211, 311) est en outre configuré pour :
déterminer une plage associée à l'événement de guidage de trafic en se basant sur la fiabilité déterminée de l'événement de guidage de trafic,
afficher, via le dispositif d'affichage (160, 212, 314), les informations relatives à l' événement de guidage de trafic en se basant sur la plage déterminée associée à l'événem ent de guidage de trafic.

7. Procédé de fonctionnement d'un dispositif électronique (101, 201, 301), le procédé comprenant :
recevoir (601), par le circuit de communication sans fil (192, 235, 330) du dispositif électronique (101, 201, 301), un message de véhicule à tout, V2X, provenant d'un dispositif électronique externe, le message V2X comprenant un lieu du dispositif électronique externe et une précision du lieu du dispositif électronique externe ;
identifier (603) un lieu actuel du dispositif électronique (101, 201, 301) et une information de précision du lieu actuel du dispositif électronique (101, 201, 301),
déterminer (605), par au moins un processeur (120, 211, 311) du dispositif électronique (101, 201, 301), si un événement de guidage de trafic lié aux informations incluses dans le message V2X s'est produit en se basant sur le lieu du dispositif électronique externe, le lieu actuel du dispositif électronique et les informations de mouvement du dispositif électronique ;
en réponse à la détermination que l'événement de guidage de trafic s'est produit, déterminer (607), par l'au moins un processeur (120, 211, 311), une fiabilité de l'événement de guidage de trafic en appliquant des pondérations respectives, qui correspondent à un type d'événement de guidage de trafic, à la précision du lieu du dispositif électronique externe et à la précision du lieu actuel du dispositif électronique (101, 201, 301) ; et
sortir (609), via un dispositif d'affichage (160, 212, 314) du dispositif électronique (101, 201, 301), des informations relatives à l'événement de guidage de trafic comprenant une indication de la fiabilité déterminée de l'événement de guidage de trafic.

8. Procédé de la revendication 7, comprenant en outre :
détecter la précision du lieu actuel du dispositif électronique (101, 201, 301), en se basant sur au moins l'un de ce qui suit : un type de capteur de reconnaissance de lieu utilisé pour estimer le lieu actuel du dispositif électronique (101, 201, 301), ou un type de processus d'estimation de lieu utilisé pour estimer le lieu actuel.

9. Procédé de la revendication 7, dans lequel les informations relatives à l'événement de guidage de trafic sont émises lorsque la fiabilité déterminée de l'événement de guidage de trafic satisfait à une condition prédéterminée.

10. Procédé de la revendication 9, comprenant en outre la détermination du fait si un lieu associé à l'événement de guidage de trafic est disposé dans un lieu géographique prédéfini comme zone de conduite prudente,
dans lequel les informations relatives à l'événement de guidage de trafic sont émises indépendamment du fait que la fiabilité déterminée de l'événement de guidage de trafic satisfasse ou non à la condition prédéterminée lorsque l'événement de guidage de trafic est disposé dans la zone de conduite prudente.

11. Procédé de la revendication 7, dans lequel l'indication de la fiabilité déterminée de l'événement de guidage de trafic comprend un message d'avertissement, et dans lequel l'indication varie en couleur, en symbole, en taille et/ou en luminosité en fonction de la fiabilité déterminée.

12. Procédé de la revendication 7, dans lequel la sortie des informations relatives à l'é vénement de guidage de trafic comprend :
déterminer une plage associée à l'événement de guidage de trafic en se basant sur la fiabilité déterminée de l'événement de guidage de trafic,
afficher les informations relatives à l'événement de guidage de trafic en se basant sur la plage déterminée associée à l'événement de guidage de trafic.
